# EUROPEAN PATENT SPECIFICATION

(11) **EP 2 350 839 B1**
(45) Date of publication and mention of the grant of the patent: **09.07.2014**
(21) Application number: 09823182.2
(22) Date of filing: 27.10.2009
(51) Int. Cl.: G06F 11/10

(54) **A MASS-STORAGE SYSTEM UTILIZING SOLID-STATE STORAGE AND NON-SOLID-STATE STORAGE**
MASSENSPEICHERSYSTEM, DAS FESTKÖRPERSPEICHERUNG UND NICHT-FESTKÖRPERSPEICHERUNG VERWENDET
SYSTÈME DE MÉMOIRE DE MASSE UTILISANT UNE MÉMOIRE À SEMI-CONDUCTEURS ET UNE MÉMOIRE NON INTÉGRÉE

(30) Priority: 27.10.2008 US 193079 P
(43) Date of publication of application: 03.08.2011
(73) Proprietor: Kaminario Technologies Ltd., 20692 Yokne'am ILIT (IL)
(72) Inventor: SELFIN, Moshe, Needham MA 02492 (IL); GOLAN, Daniel, 32716 Haifa (IL); DUBOVI, Ofir, 34602 Haifa (IL); KOREN, Benny, 30900 Zichron Yakkov (IL); ATZMONY, Yedidia, 84965 Omer (IL)
(74) Representative: White, Duncan Rohan
(86) International application number: PCT/IL2009/001005
(87) International publication number: WO 2010/049929

(56) References cited:
- US-A- 5 734 814
- US-A1- 2005 102 553
- US-A1- 2007 094 446
- US-A1- 2008 059 697
- US-A1- 2008 059 834
- US-A1- 2008 104 344
- US-B2- 7 254 669
- US-B2- 7 380 158

## Description

### FIELD OF THE INVENTION

The present invention is in the field of storage systems. More particularly, the present invention is in the field of storage systems utilizing heterogeneous solid-state and non-solid-state storage.

### LIST OF REFERENCES

The following references are considered to be pertinent for the purpose of understanding the background of the present invention:

US Patent No. 6,742,140 to Jason R Caulkins.

US Patent No. 6,643,209 to Jason R Caulkins.

US Patent No. 6,181,630 to Jason R Caulkins.

US Patent Application Publication No. US2007/0245076 to Chang et al.

### BACKGROUND OF THE INVENTION

US Patent No. 7,225,308 to Melament, et al. discloses an inexpensive storage system and methods of managing such a system. In one preferred embodiment, the Melament, et al. system includes a high performance high reliability storage medium configured for initial storage of data, a low performance high reliability storage medium configured for backup of data initially stored on the high performance high reliability storage medium, and a high performance low reliability storage medium, configured to receive data transferred from the high performance high reliability storage medium, after the data has been backed up on the low performance high reliability storage medium. Melament, et al. submit that their proposed invention significantly reduces the cost of the system without substantially comprising performance. Melament, et al. further submit that reliability is likewise maintained owing to the high reliability backup.

International Application Publication No. WO 2004/027626 to David Irwin discloses a system which includes volatile solid-state storage devices used in a redundant array, in addition to: one or more uninterrupted power supply (UPS) modules which may be arranged in a redundant manner themselves; one or more non-volatile redundant back-up storage devices that have data access and transfer speeds which are slower than the volatile solid-state storage devices, but that can retain data without power; a system controller which monitors and controls the system components; a high speed system input/output module used for external data transfer connections with computer systems or networks; and a user interface for system control and monitoring. The back-up storage devices can also be arranged in a redundant array.

US Patent No. 5,241,508 to Berenguel, et al. discloses a nonvolatile memory system for a host computer system including a nonvolatile memory and a volatile random access memory that is chosen because of its short access time. When main power to the host system and RAMDISK is interrupted, data stored in the volatile memory is automatically transferred to the nonvolatile memory where it is stored until power is restored. When main power is restored, the data is automatically returns to the volatile memory. The RAMDISK memory features a power monitoring circuit that detects when main power is interrupted and switches the system onto a battery backup power source in order to power the RAMDISK while data transfer takes place. After power has been restored, the backup battery is recharged automatically by the monitoring circuit.

US Patent Application Publication No. 20010018728 to Topham et al. discloses a RAID device with a pair of non-volatile solid state data storage devices and one or more rotating disk drives, giving improved access time performance to the array. Data is staged on the pair of solid state data storage devices, and periodically backed up to the rotating disk drive(s). Topham et al. suggests using Dynamic Random Access Memory (DRAM) arrays as an alternative to the solid state data storage devices. DRAM devices are intrinsically volatile, and lose their stored data when power is removed. In order to make a non-volatile solid state data storage device, Topham et al. suggest a combination of an array of DRAM devices, and a battery power supply in a casing. Topham et al. asserts that although DRAM's provide better performance in terms of read and write access times than a comparable MRAM unit, there is the disadvantage of the need to provide a battery back-up to overcome the intrinsic volatility of DRAM devices to provide a non-volatile DRAM data storage unit.

US 2005102553 discloses a storage controller that backs up data from primary volumes to secondary volumes.

### SUMMARY OF THE INVENTION

There is provided according to some embodiments of the invention, a storage system and a method of operating same. According to some embodiments of the invention, the storage system may include: a primary storage space, a temporary backup storage space, a permanent backup storage space and a storage controller. The primary storage space is associated with a first plurality of VS devices and used for storing the entire data-set of the storage system. The temporary backup storage space is associated with a second plurality of VS devices. The permanent backup storage space is associated with a third plurality of NVS devices. The storage controller is responsive to a write request related to a data-element for implementing a provisional redundant storage sequence including: storing the data-element within the primary storage space and substantially immediately or concurrently storing recovery-enabling-data corresponding to the data-element within the temporary backup storage space, and acknowledging the write request substantially immediately following completion of the storage within the primary storage space and within the temporary backup storage space. The controller is further adapted to destage the recovery-enabling data to the permanent backup storage space asynchronously with the provisional redundant storage sequence and according to a predefined permanent backup deferral policy. The predefined permanent backup deferral policy setting a controlled timeframe for deferring the destaging of the recovery-enabling data relative to the respective provisional redundant storage sequence. The UPS units are configured to provide backup power in case of power interruption to enable completion of destaging of recovery-enabling data for the entire data-set of the storage system.

In some embodiments, the controller is responsive to an indication that the recovery-enabling-data was successfully destaged to the permanent backup storage space for releasing the temporary backup storage space storage resources that were used for storing the corresponding recovery-enabling-data.

In some embodiments, the storage capacity of the temporary backup storage space is substantially smaller than the storage capacity of the primary storage space, and the storage capacity of the permanent backup storage space is substantially equal to or greater than the storage capacity of the primary storage space.

In further embodiments, at any time during the operation of the storage system, the data stored within the primary storage space is protected by corresponding recovery-enabling-data that is stored within the temporary backup storage space or within the permanent backup storage space or in both.

In still further embodiments, the storage controller is adapted to operate according to the predefined permanent backup deferral policy during a normal operation mode, and wherein the storage controller is responsive to a power interruption for switching to a data protection mode during which the controller is adapted to destage any recovery-enabling data which was not yet destaged to the permanent backup storage space during the normal operation mode. According to some embodiments during normal operation of the storage system a relatively small portion of the data within the primary storage space is protected by data within the temporary backup storage space, and the permanent backup storage space protects at least the remaining data which is not protected by the data within the temporary backup storage space.

According to yet further embodiments, on switching to the data protection mode, the storage controller is adapted to suspend service for I/O requests from entities outside the storage system. In some embodiments, once appropriate power is resumed, the storage controller is adapted to recover from the permanent storage space and into the primary storage space any data which was lost from the primary storage space before resuming service for I/O requests from entities outside the storage system.

According to some embodiments, during the normal operation mode, the controller is responsive to loss of any data from the primary storage space for recovering the lost data using recovery-enabling data from the temporary backup storage space, from the permanent backup storage space or from both.

According to some embodiments, the first plurality of VS devices is adapted to allocate to the primary storage space a fourth plurality of physical storage locations, and wherein the storage controller is adapted to map the fourth plurality of physical storage locations to a respective fifth plurality of logical storage addresses, and wherein the storage controller is adapted to provision the fifth plurality of logical storage addresses to one or more hosts associated with the storage system. According to further embodiments, the second plurality of VS devices is adapted to allocate to the temporary backup storage space a sixth plurality of physical storage locations, and wherein the storage controller is adapted to associate each one or each group of physical storage locations within the sixth plurality of physical storage locations with corresponding one or a group of physical storage locations within the fourth plurality of physical storage locations allocated to the primary storage space. In still further embodiments, the second plurality of VS devices is adapted to allocate to the temporary backup storage space a sixth plurality of physical storage locations, and wherein the storage controller is adapted to associate each one or each group of physical storage locations within the sixth plurality of physical storage locations with corresponding one or a group of logical storage addresses within the fifth plurality of logical storage addresses.

According to some embodiments, the third plurality ofNVS devices is adapted to allocate to the permanent backup storage space a seventh plurality of physical storage locations, and wherein the storage controller is adapted to associate each one or each group of physical storage locations within the seventh plurality of physical storage locations with corresponding one or a group of physical storage locations within the fourth plurality of physical storage locations allocated to the primary storage space. In further embodiments, the third plurality of NVS devices is adapted to allocate to the permanent backup storage space a seventh plurality of physical storage locations, and wherein the storage controller is adapted to associate each one or each group of physical storage locations within the seventh plurality of physical storage locations with corresponding one or a group of logical storage addresses within the fifth plurality of logical storage addresses.

In some embodiments, the deferral policy is associated with a capacity of the UPS units and is configured so that in case of power interruption, the backup power available from the UPS units is sufficient to enable destaging of all pending write commands to the permanent backup storage space and for completing storage of corresponding backup data within the permanent backup storage space.

In further embodiments, a size of the temporary backup storage space is determined according to the capacity of UPS units, or according to the amount of available backup power. In some embodiments, the size of the temporary backup storage space is such that the available backup power is sufficient to enable destaging of the entire recovery-enabling data within the temporary backup storage space and to complete storage of the respective backup data within the permanent backup storage space. In further embodiments the deferral policy is associated with the size of the temporary backup storage space and is configured so that destaging of recovery-enabling data to the permanent backup storage space is promoted when the availability of storage resources within the temporary backup storage space falls below a predefined level.

In still further embodiments, the deferral policy is configured so that priority is given to destages of multiple recovery-enabling data that together form a chunk of recovery-enabling data which corresponds to sequential physical storage locations within the permanent backup storage space over other pending destages.

In yet further embodiments, the deferral policy is associated with services or processes which compete for common storage system resources with the destaging process and the deferral policy is configured to implement an optimization scheme for optimizing allocation of the system's resources allocation to the destaging process and to the services or processes which compete for common storage system resources with the destaging process. In some embodiments, the optimization scheme includes a constraint related to the capacity of the UPS units. In further embodiments, the optimization scheme includes a constraint related to availability of storage resources within the temporary backup storage space. In still further embodiments, the optimization scheme is associated with any one or more of the following: current, past, projected or assumed performance of the system or any of its components, current, past, projected or assumed capacity of the system or any of its components, current, past, projected or assumed priority of a process or services running or pending in the system and current, past, projected or assumed redundancy of the system or of any of its components.

According to a further aspect of the invention, there is provided a method of managing a storage system. The method may include: receiving a request to write a data-element into the storage system; in response to the write request implementing a provisional redundant storage sequence including: storing a data-element within a first array of VS devices associated with a primary storage space of the storage system and substantially immediately or concurrently storing recovery-enabling-data corresponding to the data-element within a second array of VS devices associated with a temporary backup storage space of the storage system, and acknowledging the write request substantially immediately following completion of the storage within the primary storage space and within the temporary backup storage space; and asynchronously with the provisional redundant storage sequence, destaging the recovery-enabling data to an array of NVS devices associated with a permanent backup storage space of the storage system, wherein said destaging is carried out according to a predefined permanent backup deferral policy setting a controlled timeframe for deferring the destaging of the recovery-enabling data relative to the respective provisional redundant storage sequence.

In further embodiments, the method includes releasing the temporary backup storage space storage resources that were used for storing the recovery-enabling-data in response to an indication that the recovery-enabling-data was successfully destaged to the permanent backup storage space.

According to a further aspect of the invention there is provided a storage system comprising a first VS device, a second VS device, a NVS device, a storage controller and one or more UPS units. The storage controller is responsive to a write request related to a data-element for implementing a provisional redundant storage sequence including: storing the data-element within the first VS device and substantially immediately or concurrently storing recovery-enabling-data corresponding to the data-element within the second VS device, and acknowledging the write request substantially immediately following completion of the storage within the first and second VS devices. The storage controller is further adapted to destage the recovery-enabling data to the NVS device according to a predefined permanent backup deferral policy setting a controlled timeframe for deferring the destaging of the recovery-enabling data relative to the respective provisional redundant storage sequence. According to the deferral policy, the controller is configured to destage the data asynchronously with the provisional redundant storage sequence, the controller is adapted to. The UPS units are configured to provide backup power in case of power interruption to enable deference of the destaging of the recovery-enabling data to the permanent backup storage space.

In some embodiments, the deferral policy is associated with a capacity of the UPS units and is configured so that in case of power interruption, the backup power available from the UPS units is sufficient to enable destaging of all pending write commands to the NVS device and for completing storage of corresponding backup data within the NVS device.

According to yet a further aspect of the invention, there is provided a storage system, comprising: a primary storage space, a temporary backup storage, a storage controller and one or more uninterrupted power supply (UPS) units. The primary storage space associated with a first plurality of VS devices and used for storing the entire data-set of the storage system. The temporary backup storage space associated with a second plurality of VS devices. The storage controller is responsive to a write request related to a data-element for implementing a provisional redundant storage sequence including: storing the data-element within the primary storage space and substantially immediately or concurrently storing recovery-enabling data corresponding to the data-element within the temporary backup storage space, and acknowledging the write request substantially immediately following completion of the storage within the primary storage space and within the temporary backup storage space. The storage controller is adapted to operate in a normal mode during which the controller is adapted to destage the recovery-enabling data to the permanent backup storage space following completion of the provisional redundant storage sequence. The storage controller is responsive to a power interruption for switching to a data protection mode during which the controller is adapted to destage any recovery-enabling data which was not yet destaged to the permanent backup storage space during the normal operation mode. The UPS units are configured to provide backup power to enable completion of destaging of recovery-enabling data for the entire data-set of the storage system during the data protection mode.

According to yet a further aspect of the invention there is provided a storage system, comprising: a primary storage space, a temporary backup storage, a storage controller and one or more uninterrupted power supply (**UPS**) units. The primary storage space associated with a first plurality of VS devices and used for storing the entire data-set of the storage system. The temporary backup storage space associated with a second plurality of VS devices. The storage controller is responsive to a write request related to a data-element for implementing a provisional redundant storage sequence including: storing the data-element within the primary storage space and substantially immediately or concurrently storing recovery-enabling data corresponding to the data-element within the temporary backup storage space, and acknowledging the write request substantially immediately following completion of the storage within the primary storage space and within the temporary backup storage space. The storage controller is responsive to a power interruption for suspending service for I/O requests from entities outside the storage system and for storing the entire data set of the storage within the permanent backup storage space. Once appropriate power is resumed, the storage controller is adapted to recover from the permanent storage space and into the primary storage space any data which was lost from the primary storage space before resuming service for I/O requests from entities outside the storage system. The UPS units are configured to provide backup power to enable completion of storing the entire data set of the storage within the permanent backup storage space in case of power interruption.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**FIG. 1** is a high level block diagram illustration of a storage system according to one aspect of the present invention;
**FIG. 2** is a flow chart illustration of a method of managing a mass-storage system according to some embodiments of the invention;
**FIG. 3A** is a graphical illustration of a primary storage space map utilized by way of example by a PS management module, according to some embodiments of the invention;
**FIG. 3B** is a graphical illustration of a temporary backup storage space map utilized by way of example by a temporary backup management module, according to some embodiments of the invention;
**FIG. 3C** is a graphical illustration of a permanent backup storage space map utilized by way of example by a PB management module , according to some embodiments of the invention; and
**FIG. 4** is a block diagram illustration of a further configuration of a mass storage system according to some embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures and components have not been described in detail so as not to obscure the present invention.

Unless specifically stated otherwise, as apparent from the following discussions, it is appreciated that throughout the specification discussions utilizing terms such as "processing", "computing", "calculating", "determining", "generating", "assigning" or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer selectively activated or reconfigured by a computer program stored in the computer. Such a computer program may be stored in a computer readable storage medium, such as, but not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Throughout the description of the present invention, reference is made to the term "volatile storage" module or unit and to the abbreviation "VS module". Unless specifically stated otherwise, the terms "volatile storage" module or unit, "VS module" and the like shall be used to describe a component which includes one or more data retention modules whose storage capabilities depend upon sustained power. Non-limiting examples of devices which may be used as part of a volatile storage device include: random-access memory (RAM), dynamic random-access memory (DRAM), static random-access memory (SRAM), Extended Data Out DRAM (EDO DRAM), Fast Page Mode DRAM and including collections of any of the above and various combinations thereof, integrated via a common circuit board, and/or integrated via any type of computer system including any type of server, such as a blade server, for example. Further details with respect to the operation of the volatile storage devices as part of some embodiments of the present invention shall be provided herein.

Throughout the description of the present invention, reference is made to the term "nonvolatile storage" module or unit or to the abbreviation "NVS" module or unit. Unless specifically stated otherwise, the terms "nonvolatile storage" module or unit and "NVS" module or unit and the like shall be used to describe a component which includes one or more data-retention modules that are capable of substantially permanently storing data thereon independent of sustained external power. Non-limiting examples of nonvolatile storage include: magnetic media such as a hard disk drive (HDD), FLASH memory or FLASH drives, Electrically Erasable Programmable Read-Only Memory (EEPROM), battery backed DRAM or SRAM. Non-limiting examples of a non-volatile storage module include: Hard Disk Drive (HDD), Flash Drive, and Solid-State Drive (SSD).

Throughout the description of the present invention reference is made to the term "data element". Unless specifically stated otherwise, the term "data element" and the like shall be used to describe a set of bits or bytes which together hold data received or retained by the storage system. Such a set of data may be referred to as a "block of data" (block for short) or the set of data corresponding to a data element may be comprised of several blocks. Non-limiting examples of data elements include: one or more blocks or tracks received by the system from a host, such as SCSI blocks, Fiber Channel (FC) blocks, TCP/IP packets or blocks over TCP/IP, Advanced Technology Attachment (ATA) blocks and Serial Advanced Technology Attachment (SATA) blocks.

Throughout the description of the present invention reference is made to the term "I/O command" or "I/O request". These terms are used interchangeably. The terms "I/O command" and "I/O request" are known in the art and the following definition is provided for convenience purposes. Accordingly, unless stated otherwise, the definition below shall not be binding and this term should be construed in accordance with their usual and acceptable meaning in the art.

An "I/O command" or an "I/O request" is an instruction to a storage system with reference to a certain data element that is part of the current data-set of the storage system or that is to become a part of the current data-set of the storage system. Typical types of I/O command/request include a read command/request that is intended to instruct the storage system to retrieve a certain data element(s) that is stored within the storage system, and a write command/request that is intended to instruct the storage system to store a new data element(s) within the storage system or to update a previous version of a data element which already exists within the storage system.

It would be appreciated, that many storage interface protocols include different variants on the I/O commands/requests, but often such variants are essentially some form of the basic read and write commands/requests.

By a way of example, the SCSI protocol supports read and write commands on different block sizes, but it also has variants such as the verify command which is defined to read data and then compare the data to an expected value.

Further by way of example, the SCSI protocol supports a write-and-verify command which is effective for causing a respective storage system to store the data to which the command relates and to read the data stored and verify that the correct value was stored within the storage system.

It would be appreciated that certain I/O commands may relate to non-specific data elements while other I/O commands may relate to the entire data set of the storage system as a whole. Such commands may be regarded as a batch command relating to a plurality of data elements and may initiate a respective batch process.

Unless specifically stated otherwise, the term "data-set of the storage system" or "entire data-set of the storage system" or "current data-set of the storage system" and the like shall be used to describe a collection of data elements which together constitute at least one current-copy of the entire data which is stored within the storage system by external entities, at any given point in time. It would be appreciated that the data-set of the storage system may change over time and may evolve dynamically. For example, between two instants the data-set of the storage system may undergo changes, for example, as a result of I/O activity with external hosts, and thus the data-set of the storage system at the first instant may differ from the data-set of the storage system at the second instant. It would be further appreciated that in a storage system, in addition to the data-set which constitutes a copy of the entire data stored within the system by external entities, other data may be stored, including, but not limited to, metadata, configuration data and files, maps and mapping functions, recovery-enabling data and backup data, etc.

Throughout the description of the present invention reference is made to the term "recovery-enabling data". Unless specifically stated otherwise, the term "recovery-enabling data" and the like shall be used to describe certain supplemental data (R) that is stored within the system possibly in combination with one or more references to data elements which are part of the current data-set of the storage system and which (collectively) enable(s) recovery of a certain (other) data element (D) that is part of the data-set of the storage system. Each recovery-enabling data-element (R) may be associated with at least one original data element (D) which is part of the current data-set of the storage system. Each recovery-enabling data-element (R) may be usable for enabling recovery of the original data element (D) with which it is associated, for example, when the original data (D) is lost or corrupted. A recovery-enabling data-element (R) may enable recovery of the corresponding data element (D) based on the data provided by recovery-enabling data (R) (e.g., the supplemental data with or without references to other data elements) and the unique identity of the respective data element which is to be recovered. Non-limiting examples of recovery-enabling data may include: a mirror of the data element (the supplemental data associated with a data elements is an exact copy of the data element - no need for references to other data elements); parity bits (the supplemental data associated with a data element are the parity bits which correspond to the data element and possibly to one or more other data elements and with or without references to the data element and to the other data elements associated with the parity bits); error-correcting code (ECC). It would be appreciated that while in order to recover a certain data element, in addition to certain supplemental data (e.g., parity bits), references to the other data elements may be required, the references to the other data elements may be obtained by implementing an appropriate mapping function (or table) and thus, the recovery-enabling data may not be required to include the reference to the other data elements associated with the supplemental data. However, in other cases, each recovery-enabling data element (e.g. parity bits) may include references to each data element that is associated with the respective recovery-enabling data element.

Throughout the description of the present invention reference is made to the term "physical storage location" or "physical storage locations" in the plural. The term "physical storage location" is known in the art and the following definition is provided for convenience purposes. Accordingly, unless stated otherwise, the definition below shall not be binding and this term should be construed in accordance with their usual and acceptable meaning in the art. "Physical storage location" is the representation that is used within a storage system to designate discrete or atomic hardware resources or locations where data can be stored. For example, on a Dynamic Random Access Memory (DRAM) unit, a physical storage location may be each cell of the unit, which is typically capable of storing 1 bit of data (although a technology known as "multi-level cell" or "MLC" in abbreviation enables storage of multiple bits on each cell). In a further example, each physical storage location may be associated with a chunk of multiple hardware cells which cannot be individually allocated for storage. Further by way of example, a physical storage location may defined by to a specific hardware addressing scheme or protocol used by a computer storage system to address I/O requests referencing logical storage addresses to explicit hardware physical storage locations, and each physical storage location may correspond to one more cells of the storage unit and to one or more bits or bytes. Further by way of example, a physical storage address may be a SCSI based physical storage address.

Throughout the description of the present invention reference is made to the term "logical storage address". The term "logical storage address" or the interchangeable term "virtual storage address" is known in the art and the following definition is provided for convenience purposes. Accordingly, unless stated otherwise, the definition below shall not be binding and this term should be construed in accordance with their usual and acceptable meaning in the art. A logical storage address is an abstraction of one or more physical storage locations. As an example, in a block-based storage environment, a single block of information is addressed using a logical unit number (LUN) and an offset within that LUN - known as a Logical Block Address (LBA).

Throughout the description of the present invention reference is made to the term "release" or the like with reference to storage resources. The term "released" as used with reference to storage resource is known in the art and the following definition is provided for convenience purposes. Accordingly, unless stated otherwise, the definition below shall not be binding and this term should be construed in accordance with their usual and acceptable meaning in the art. The term "release" describes the process of designating that data stored in a certain location(s) (or addresses) in a storage unit may be discarded or written over, and the discard or overwrite operation will not affect the integrity of the data set of the storage unit, for example as presumed by the external host (or hosts) interacting with the data set.

Throughout the description of the present invention reference is made to the term "destage", "destaging" or the like with reference to data within a storage device or module. The term "destage" or "destaging" as used herein is known in the art and the following definition is provided for convenience purposes. The term "destage" or "destaging" relate to the process of copying data from a first data-retention unit to a second data-retention unit, which is typically functionally or otherwise different from the first data-retention unit. In one non-limiting example, a destaging process may be used for the purpose of releasing the storage resources allocated by the first data retention unit for storing the destaged data.

According to one aspect of the present invention, there is provided a system for storing data and a method of operating same. According to a further aspect of the invention, there is provided a controller for controlling the operation of the storage system. According to some embodiments, the storage system may include a primary storage space, a temporary backup storage space, a permanent backup storage space, a storage controller and one or more uninterrupted power supply (UPS) units. The primary storage space is associated with a plurality of VS devices and is used for storing the entire data-set of the storage system. The temporary backup storage space is also associated with a plurality of VS devices. The permanent backup storage space is associated with NVS devices. The controller is responsive to a write request related to a data element being received at the storage system for implementing a provisional redundant storage sequence including: storing the data element within the primary storage space and substantially immediately or concurrently storing recovery-enabling-data corresponding to the data-element within the temporary backup storage space. The controller is configured to acknowledge the write request substantially immediately following completion of the storage within the primary storage space and within the temporary backup storage space, and the provisional redundant storage sequence is thus complete. The one or more UPS units are configured to provide backup power to extend data-retention on some or all of the VS devices in case of power interruption. Asynchronously with the provisional redundant storage sequence, the controller is adapted to destage the recovery-enabling-data to the permanent backup storage space.

In some embodiments, the controller is configured to manage the asynchronous destaging of the recovery enabling data in accordance with a predefined permanent backup deferral policy which takes into account at least one parameter that is independent of the provisional redundant storage sequence of the respective data element. In further embodiments, the predefined policy sets a controlled timeframe for deferring the asynchronous destaging of the recovery enabling data relative to a storage system's response to the respective write request. In yet further embodiments, the predefined policy may take into account the capacity or the UPS units. The predefined routine may further take into account the availability of storage resource within the temporary backup storage space. In still further embodiments, the predefined routine may take into account at least one other process running within the storage system.

In some embodiments, during normal operation (not power interruption) the UPS units are configured to provide backup power for at least the time-duration required for completing the destaging of data from the substantially temporary backup space (which is based on VS devices) to the substantially permanent backup storage layer (which is based on NVS devices), so that the entire data set of the storage system is backed up in NVS devices before the storage system can gracefully shutdown.

In some embodiments, the controller is responsive to an indication that the recovery-enabling-data was successfully destaged to the permanent backup storage space for releasing the temporary backup storage space storage resources that were used for storing the corresponding recovery-enabling-data. Once released, the storage resources of the temporary backup storage space can be used for storing other data, such as recovery-enabling-data corresponding to a data element that is associated with a more recent write command.

In some embodiments, the storage capacity of the temporary backup storage space is substantially smaller than the storage capacity of the primary storage space. In further embodiments, the storage capacity of the permanent backup storage space is substantially equal to or greater than the storage capacity of the primary storage space. In still further embodiments, at any time during the operation of the storage system, the data stored within the primary storage space is protected by corresponding recovery-enabling-data that is stored within the temporary backup storage space or within the permanent backup storage space or in both. In yet further embodiments, during normal operation (not power interruption), a relatively small portion of the data within the primary storage space is protected by data within the temporary backup storage space, and the permanent backup storage space protects at least the remaining data which is not protected by the data within the temporary backup storage space.

As is well known, the ability of a volatile data-retention unit to retain data is sensitive to power interruption. It is therefore common to regard volatile data retention devices as "memory devices" and not as "storage devices". However, in some embodiments of the present invention, a storage system includes a primary storage space which is associated with a plurality of volatile data-retention devices (or "volatile storage devices"), and which VS devices are used in combination with other components and logic for substantially persistently storing data. Specifically, in accordance with embodiments of the present invention, the storage system further includes: two complementary backup storage spaces: a temporary backup storage layer which is also associated with VS devices; and a permanent backup storage layer which is associated with NVS devices, a storage controller and one or more uninterrupted power supply ("UPS") units for providing backup power.

The VS devices associated with the primary storage space are regarded herein as storage devices, despite their inherent volatility, since the logical storage addresses that are used by the storage system for servicing I/O requests from external sources are associated with physical storage locations on VS devices, and this configuration is restored in case of power interruption before normal operation of the storage system is resumed. It would be appreciated that this sort of behavior is characteristic of storage devices. The proposed concept of using volatile data retention devices for persistent storage is explained in more detail herein.

During normal operation of the storage system, I/O requests from external sources (which typically reference logical storage addresses) are mapped to physical storage locations allocated for the primary storage space by the VS devices associated with the primary storage space. As will be described in further detail herein, the above components of the storage system collectively operate to protect the data within the VS devices associated with the primary storage space (which is the entire data set of the storage system), including in case of severe power interruption. In case of failure within the primary storage space, the entire data-set is protected and can be recovered from the temporary backup storage layer or from the permanent backup storage layer. In case of severe power interruption, the entire data set of the storage system is stored within the NVS devices underlying the permanent backup storage layer, and once normal power is restored the data that was lost is recovered into the primary storage space and normal I/O operations are resumed vis-à-vis the VS devices associated with the primary storage space. The above, operations are described in further detail herein.

From a user's (host) perspective, the data protection and the data availability capabilities of the proposed storage system is similar to the protection and availability provided by many commercially available non-volatile storage systems, such as hard-drive disk ("**HDD**") based storage system (including various RAID implementations), or in another example, such as non-volatile solid-state disk ("**SDD**") flash based storage systems. For example, when a read command is received at the storage system, for example, from a host, the storage system controller reads the logical storage address referenced by the read command and determines the corresponding physical storage location(s) associated with the referenced logical storage address. The physical storage location(s) point towards specific locations within one or more of the first plurality of VS devices associated with the primary storage space. The storage system controller reads the data stored on the VS device(s) at the physical storage location(s) determined to be associated with the read command and communicates the data back to the host.

Some embodiments of the present invention, seek to tap into the performance advantage of volatile data-retention devices compared to conventional HDD, SDD flash storage devices and combinations thereof, while maintaining similar data protection and availability capabilities. Various embodiments of the present invention implement algorithms for controlling the destaging of backup-data (referred to herein as "recovery-enabling-data) to NVS devices associated with the permanent backup storage space. By way of example, the proposed system according to some embodiments of the invention, and the algorithm implemented by the system may benefit certain aspects of the storage system's operation including, but not limited to: improve overall performance of the storage system, balance destaging of data to the permanent backup storage space with serving of I/O requests - as en example of services competing with the destaging service

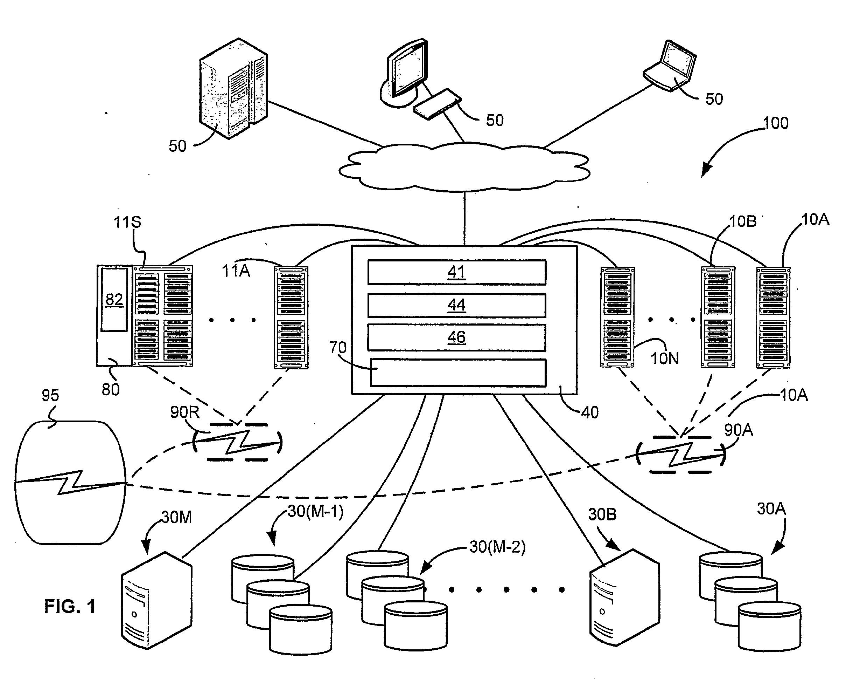

Reference is now made to **FIG. 1****,** which is a high level block diagram illustration of a storage system according to one aspect of the present invention. According to some embodiments, the storage system **100** includes at least a first and a second VS devices **10A** and **11A,** respectively, and a NVS device **30A.** Each of the first and the second VS devices **10A** and **11A** may be adapted to store data thereon. The NVS **30A** may also be adapted to store data thereon. The storage system **100** may be operatively connected to one or more hosts **50** and may provide storage services to the hosts **50.**

In some embodiments, the storage system **100** is a mass-storage system which is comprised of a plurality of storage devices and associated hardware, firmware and software and that is typically used for enabling storage of large amounts of data. As is shown in **FIG. 1** and according to some embodiments of the invention, the first volatile VS device **10A** may be part of a first array of VS devices **10A-10N,** the second VS device **11A** may be part of a second array of VS devices **11A-11S** and the NVS device **30A may** be part of an array ofNVS devices **30A-30M.**

The storage system **100** may further include one or more UPS units **90A-90R** and a storage controller **40.** The UPS units **90A-90R** are configured to provide backup power to extend data-retention on some or all of the VS devices in case of power interruption, as will be described in further detail below. The storage system controller **40** is responsible for managing various aspects of the operation of the mass storage system **100** and the operation of the components thereof. The storage system controller **40** may be comprised of a plurality of distributed components. Various implementations of a distributed storage system controller are known *per se.* The storage system controller **40** may be comprised of several management modules and some or all of the management tasks may be divided among such management modules, as described herein below. The storage system **100** may utilize the controller **40** in combination with other components and logic, including the UPS units **90A-90R,** to achieve data protection and data availability capabilities similar to the protection and availability provided by many commercially available non-volatile storage systems, as will be described in further detail herein.

In one embodiment, the storage controller **40** may include a primary-storage management (hereinafter "**PS management**") module **41.** The PS management module **41** may be adapted to manage and provision the primary storage space of the mass storage system **100.** The PS management module **41** may be adapted to allocate to the primary storage space a first plurality of physical storage locations provided by the array of VS devices **10A-10N** that is associated with the primary storage space. A plurality of logical storage addresses may be mapped to the plurality of physical storage locations allocated to the primary storage space, and the PS management module **41** may provision the logical storage addresses which were mapped to the primary storage space, for example to the hosts **50** connected to the mass storage system **100.** The provisioned logical storage addresses, and the underlying physical storage locations, are made available to the hosts **50** for storing data within the system **100.** Thus, the physical storage locations provided by the array of VS devices **10A-10N** that is associated with the primary storage space used for storing the entire data-set of the mass-storage system **100,** and for servicing I/O requests according to the logical storage location(s) referenced by each I/O request and the corresponding physical storage location(s).

The primary storage space may be embodied in a map of the primary storage space. The primary storage space map represents the allocation of the physical storage locations to the plurality of logical storage addresses provisioned by the storage system **100.** For each provisioned logical storage address, the map of the primary storage space includes the respective physical storage location which was allocated to the logical storage address. Those versed in the art would appreciate that a map which includes the logical storage addresses provisioned by the storage system and the respective physical storage location(s) allocated for each logical storage address may be substituted with a mapping function, possibly, in combination with some additional information about the storage space.

In the herein description, in accordance with certain embodiments of the invention, the mass storage system is essentially described as a SAN (Storage Area Network) mass storage system which implements the SCSI storage interface protocol. However, other embodiments of the present invention are not limited to this particular network storage architectures and configuration. For example, in one embodiment, a NAS (Network Attached Storage) architecture may be implemented over the SAN architecture described herein. Other storage system architectures and configurations may be readily devised by those versed in the art based on the disclosure provided herein.

Furthermore, some embodiments of the invention are not limited to the use of the SCSI storage interface protocol and one or more other protocols may be implemented within the mass storage system **100** either in addition to or as an alternative of the SCSI storage interface protocol. The term "storage interface-protocol" is known in the art and the following definition is provided for convenience purposes. Accordingly, unless stated otherwise, the definition below shall not be binding and this term should be construed in accordance with their usual and acceptable meaning in the art. A storage interface protocol is a predefined method (standard or non-standard) to communicate with the storage system or with some portion of the storage system, for example with the physical storage devices associated with one or more of the primary storage space, the temporary backup storage space and the permanent backup storage space.

Non-limiting examples of a storage interface-protocol include the following: Small Computer System Interface (SCSi), Fibre Channel (FC), Fibre Channel over Ethernet (FCoE), Internet SCSI (iSCSI), Serial Attached SCSI (SAS), Enterprise System Connectivity (ESCON), Fibre Connectivity (FICON), Advance Technology, Attachment (ATA), Serial ATA (SATA), Parallel ATA (PATA), Fibre ATA (FATA), ATA over Ethernet (AoE).

For convenience, by way of non-limiting example, some embodiments of the invention are described herein with reference to the SCSI storage interface-protocol. However, it would be appreciated that further embodiments of the invention may be adapted to accommodate any other suitable interface-protocol.

Continuing with the description of certain embodiments of the invention which are illustrated by **FIG. 1****,** logical units (abbreviated: **"LUs"** or **"LU"** in the singular) which are each comprised of a plurality of logical storage addresses (or logical block addresses, abbreviated **"LBAs"** or **"LBA"** in the singular) are created, with each LBA within each LU being uniquely associated with one or more specific physical storage locations within one or more VS devices from the first array **10A-10N.** The terms logical units and logical storage addresses and their respective abbreviations "LU" and "LBA" are known in the art and these terms should be construed in accordance with their usual and acceptable meaning in the art.

In one embodiment, for each logical storage address a specific physical storage location may be exclusively allocated. In a further embodiment, for each logical storage address there may be allocated a group of physical storage locations comprising two or more specific physical storage locations which may be exclusively allocated to the respective logical storage address and which may be collectively used to store a data element associated with the logical storage address. The storage of the data element may require the full physical storage resource provide by the group of physical storage locations or only a portion of the storage resource may be required for storing the respective data element.

Each physical storage location within the storage system **100,** and in particular within the primary storage space, may be individually addressable. In other embodiments, groups of physical storage locations may be defined, for example within the primary storage space, and the physical storage locations can only be addressed as a group while each physical storage location cannot be accessed individually. For convenience, such a group of physical storage locations shall be referred to herein as a chunk of physical storage locations or chunks of physical storage locations in the plural. Each logical storage address may be associated with one or with multiple chunks of physical storage locations.

Each physical storage location in each of the primary storage space, the temporary backup storage space and the permanent backup storage space may correspond to one bit or byte or to a predefined number of bits or bytes.

In some embodiments, the storage system controller **40** may be adapted to define the fundamental (atomic) unit of physical storage (a single physical storage location or a fundamental (atomic) chunk of physical storage locations in each of the primary storage space, the temporary backup storage space and the permanent backup storage space.

The number of physical storage locations that are allocated to each one of the logical storage addresses provisioned by the mass storage system **100** may be predefined and/or may be configurable. The number of logical storage addresses associated with each LU may also be predetermined, although this number is not necessarily equal across the plurality of LUs provisioned by the mass storage system 100. The number of logical storage addresses associated with each LU may be configurable and may be modified from time to time.

In one example, the LUs may be created by the storage controller **40** or by the PS management module **41.** The mass storage system **100** allocates the LUs to the hosts **50.** By allocating the LUs to the hosts, the information that is necessary for interacting with the mass storage system **100** is made available to the hosts **50.** For example, the hosts may issue read and write commands (also referred to as read and write requests) to the mass storage system **100** and the command may indicate the one or more LUs and logical storage addresses (e.g., LBAs) to which the command relates. Typically each I/O command relates to a specific LU. More details regarding the PS management module **41** are provided below.

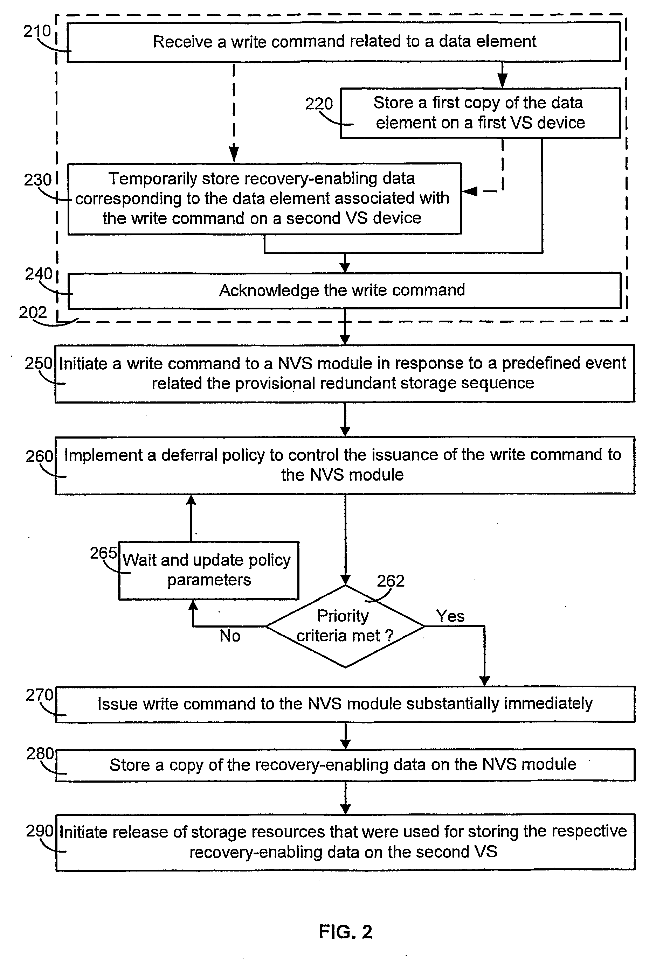

Reference is now additionally made to **FIG. 2** which is a flow chart illustration of a method of managing a mass-storage system according to some embodiments of the invention. In some embodiments, a write command related to a data element may be received in the mass-storage system **100 (block 210).** For example, a host **50** may issue a write command to be serviced by the storage system **100.** In response to the write command the data element associated with the command may be stored on a first VS device **10A** within the primary storage space **(block 220).** The first VS device **10A** may be configured to persistently store the first copy of the data element.

As would be appreciated, the first VS device **10A** may, by its nature, be susceptible to data loss in case of power interruption. However, the storage system **100** includes further components and may implement certain logic, as detailed herein, which may collectively protect the data within the VS device **10A** and make it available on the VS device **10A** in a substantially persistent manner. As will be described below, if and when data within the VS device **10A** is lost (in particular, as a result of a power interruption), the lost data is fully restored to the same physical locations on the VS device **10A** where it was originally stored (or on a clone/replacement VS device) so that it appears to users of the system and to the system's controller and allocation maps or functions that the data on the VS device **10A** was persistently retained within the VS device **10A** even after a severe power failure.

As mentioned above, in some embodiments, the write command may relate to a specific logical storage address(es), possibly within a specific LU, and upon receipt of the write command at the mass storage system **100,** the PS management module **41** may determine based on the specified logical storage address(es) (and the specific LU) which physical storage location(s) is/are associated with the write request. By way of example, in the scenario described above, the logical storage address(es) are associated with physical storage locations on the VS device referenced **10A.** However, it would be appreciated that the logical storage address(es) may be associated with physical storage locations on any one or on more than one VS devices within the first array of VS devices **10A-10N** associated with the primary storage space. For simplicity, by way of non-limiting example, in the description below the write command from the host relates to a single logical storage address (a single LBA).

In one embodiment, the storage system controller **40** may include a temporary-backup management module **44** (hereinafter **"TB management** module"). The TB management module **44** may be adapted to manage the temporary backup storage space of the mass storage system **100.**

In some embodiments, the storage system controller **40** is adapted to determine, based on a predefined criterion, the allocation of storage resources to each of the primary storage space and the temporary backup storage space. In one example VS devices within the storage system **100** may be paired, and within each pair, on a first VS device of the pair certain storage resources may be allocated to the primary storage space and on the second of VS device of the pair storage resources may be allocated to the temporary backup storage space and those temporary backup storage resources may be designated for protecting the primary storage resources within the first VS device of the pair. It would be appreciated that other schemes may be used to designate temporary backup storage resource to primary storage resources. In other embodiments, the allocation of resources to each of the primary storage space and the temporary backup storage space is manually selected, for example, by an administrator. In some embodiments, the storage capacity of the temporary backup storage space is substantially smaller than the primary storage space, and is used for substantially temporarily storing a second copy of or recovery enabling data for some of the data within the primary storage space.

In case thin provisioning is utilized by the storage system controller **40,** the above statement may relate to the extent of storage resources available to each of the temporary storage space and the primary storage space, rather than to the actual resources allocated to each of the storage spaces. Thus, for example, at an early stage, following the system initialization, the extent of primary storage resources exposed to the hosts through the storage system controller **40,** as logical storage addresses, may be substantially equal or even smaller than the resources allocated for the temporary backup storage space, however, the extent of storage resources reserved by the storage system controller **40** for the primary storage space (if not yet provisioned) is substantially greater than the extent of the storage resources allocated for the temporary storage space.

In some embodiments, the temporary backup storage space is not visible to the hosts **50.** In further embodiments, the temporary backup storage space is managed at the physical storage location level. For example, the TB management module **44** may be configured to associate each one or each group of physical storage locations within the temporary backup storage space with corresponding one or a group of physical storage locations within the primary storage space. One may appreciate that multiple physical storage locations in the temporary backup storage space may be associated with a group comprising an equal or a greater number of physical storage locations in the primary storage space. The mapping between physical storage locations within the temporary backup storage space and the physical storage locations in the primary storage space may be in accordance with a predefined rule, function and/or criterion or by explicit association.

In still further embodiments of the invention, the temporary backup storage space is managed at the logical storage address level, and by way of example, the TB management module **44** may be configured to associate each one or each group of physical storage locations within the temporary backup storage space with corresponding one or group of logical storage addresses within the primary storage space, as will be described in further detail below.

According to some embodiments, further in response to the write command, recovery-enabling data corresponding to the data element associated with the write command may be substantially temporarily stored on a second VS device **11A** within the temporary backup storage space **(block 230).** In some embodiments, the substantially temporary storage of the recovery enabling data on a VS device **11A** may be triggered or initiated directly by the receipt of the write command at the mass storage system **100,** or in further embodiments of the invention, the substantially temporary storage of the recovery enabling data may be triggered or initiated by the storage of the first copy of the data element associated with the write command within the primary storage space.

According to some embodiments, once the first copy of the data element associated with the write command is within the primary storage space (on the first VS device **10A**) and the recovery-enabling data corresponding to the data element associated with the write command is stored within the temporary backup storage space (on the second VS device **11A**), a write acknowledgment notification with respect to the write command may be generated (**block 240**). The write acknowledgment notification may be communicated to the host **50** associated with the command.

As was mentioned above, the storage of the data element associated with the write command within the primary storage space (**block 220**), the corresponding recovery-enabling data within the temporary backup storage space (**block 230**) and the acknowledgement of the write command substantially immediately upon completion of **block** 220 and **230** may be part of a provisional redundant storage sequence (**block 202**).

It would be appreciated that during the processing of a write command and before the processing is completed, a certain data element may exist within the primary storage space before it is stored within the temporary backup storage space (and within the permanent storage space). However, this data is not yet considered herein as being part of the data set of the storage system, and in some embodiments, the storage thereof within the storage system is not yet acknowledged. Furthermore, in some embodiments if the storing of either the first copy of the data element or the recovery-enabling data in the primary storage space and/or in the temporary backup storage space fails, then the respective write command received at the storage system will be deemed failed. In case of a failed write command, the data within the primary storage space and/or within the temporary storage space may be rolled back with respect to any data written thereinto in connection with the respective write command. The roll-back may restore the corresponding data to its original value prior to the write command. In further embodiments, a failed indication will be reported to the host **50** (or to any other source of the write command). In other embodiments, in response to a failed I/O command the storage system will report failure but will not try to roll back the data (for example, according to the SCSI protocol). In some embodiments, the host will be adapted to designate the data related to a failed write request as corrupted.

According to some embodiments, the controller **40** may be adapted to initiate a write command for causing recovery-enabling data to be stored within the permanent backup storage space in response to a predefined event related the provisional redundant storage sequence (**block 250**). The predefined event triggering the initiation of the write command to the permanent backup storage space may be associated with any one or more of the following: the storing of a copy of the data element to which the write command relates within the primary storage space; the storing of recovery-enabling data corresponding to the data element associated with the write command within the temporary backup storage space; and the issuing of the acknowledgment notification for acknowledging the respective write command.

According to one example, initiating the write command to the non-volatile NVS module **30A** may include registering the write command details in a queue, table or any other suitable data structure of pending write commands to the substantially permanent backup storage space. In some embodiments, each entry within the data structure that is used to hold the details a pointer of pending write commands to the permanent storage space may include a pointer or an index to the physical storage location(s) within the temporary backup storage space where the corresponding recovery-enabling data is retained. The management pending write commands to the permanent storage space shall be discussed in further detail herein.

The write command initiation details may include some or all of the following: the logical storage address to which the write command relates; the physical storage location(s) within the primary storage space with which the write command is associated; the physical storage location(s) within the temporary backup storage space with which the write command is associated; the time at which the write command to the substantially permanent backup storage space was initiated; the time at which the write command from the host to the storage system was received; the time at which the first copy of the data element was stored within the primary storage space; the time at which the corresponding recovery-enabling data was stored at the temporary backup storage space; the size of the data element.

As mentioned above with reference to **block 250** a write command to the NVS module **30A** is initiated substantially immediately upon completion of the provisional redundant storage sequence. However, according to the present invention, the actual issuance of the write command for writing data within the permanent backup storage space to protect a certain data element is unsynchronized with the provisional redundant storage sequence associated with the respective data element. According to some embodiments of the invention, the issuance of the write command to the permanent backup storage space is deferred according to a predefined permanent backup deferral policy.

In some embodiments, in accordance with the deferral policy, the writing of recovery-enabling data to the permanent backup storage space is deferred relative to the write command initiation event related to the provisional redundant storage sequence. In further embodiments, the permanent backup deferral policy may set forth a controlled timeframe for suspending the issuance of a write command to the permanent backup storage space relative to the initiation of the write command.

In some embodiments, the point of reference that is used by the deferral policy for measuring a deferral interval for any given data element (or the recovery enabling data associated with a data element) may relate to any one of the predefined events related the provisional redundant storage sequence which were mentioned above in connection with the initiation of the write command to the permanent backup storage space. In further embodiments, the deferral policy may take into account at least one parameter that is independent of the provisional redundant storage sequence associated with the respective data element.

In some embodiments the permanent backup deferral policy is implemented by the storage system controller 40. However, in further embodiments, one of the management modules may be responsible for implementing the deferral policy, for example, a dedicated permanent backup management module **46** (hereinafter "**PB management module").**

In some embodiments, the deferral policy may be configured to take into account the capacity or the UPS units. The deferral policy may further take into account the availability of storage resource within the temporary backup storage space. In another example, the deferral policy may take into account the existence of a chunk of recovery-enabling data which corresponds to sequential physical storage locations within the permanent backup storage space (e.g., according to the map of the permanent backup storage space), and possibly also the size of the sequential chunk. In still further embodiments, the deferral policy may take into account at least one other process running within the storage system.

According to some embodiments, the deferral policy may include a priority rule, function and/or criterion for promoting a pending write command to the permanent backup storage space with time. Thus, all other things being equal, a priority of a pending write command to the permanent backup storage space with time would increase with time.

For example, in some embodiments, according to the deferral policy, the write command to the NVS module **30A** may be deferred following the storage system response to the corresponding write command from the host **50,** for example, to allow completion of a priority operation or a priority sequence that is concurrently pending or that is concurrently taking place within the storage system **100.** According to some embodiments, while the write command to the NVS module **30A** is pending, its own priority may be adjusted (promoted) and thus it may itself become a high-priority operation relative to other operations within the mass-storage system **100.** It would be appreciated that other measures may be implemented by the permanent backup policy to control the amount of time a certain write command to the permanent backup storage space is deferred before being issued. In further embodiments, the time duration during which a write request to the permanent backup storage space is pending is not taken into account by the deferral policy and some pending write requests may be deferred for relatively long, and possibly unlimited, time duration.

There is now provided a discussion of some examples of possible implementation of a deferral policy which may be implemented by the storage system according to some embodiments of the present invention.

According to some embodiments, the PB management module **46** (which is, for example, responsible for implementing the deferral policy may manage a queue of pending write commands to the permanent backup storage space, and the management of the queue may be associated with the (current) capacity of the UPS units. Various queue management techniques are known *per se* and may be implemented in some embodiments of the present invention. The deferral policy may control the size of the queue and may manage it according to the capacity of the UPS units, so that in case of power interruption the backup power is sufficient to destaged the entire queue of pending write commands to the permanent backup storage space and to store the backup data within the non-volatile media underlying the permanent backup storage space. The size of the pending write requests queue is a parameter related to the aggregated footprint of the pending write requests in terms of storage space and/or in terms of the amount of power required in order to complete the destaging of the pending write requests in the queue and the storage thereof within the permanent backup storage space.

In some embodiments, the deferral policy may include several - progressive thresholds, the progressive thresholds associated with respective progressively increasing queue sizes. In association with each one of the progressive thresholds, the deferral policy may include a priority parameter, so that the larger the size of the queue the higher the priority that is given to pending write requests at the top (or at the bottom - depending on the queue management technique) of the queue. The measure and possibly other measures included in the deferral policy may be used to ensure that the size of the pending write requests queue does not grow beyond that which can be supported by the available backup power. In some embodiments, in case the amount of available backup power changes, the deferral policy is manually or automatically updated accordingly.

In further embodiments, the size of the temporary backup storage space is determined according to the capacity of UPS units, or according to the amount of available backup power. For example, the temporary backup storage space is such that the size of the available backup power is sufficient to enable to complete the destaging of the entire temporary backup storage space and to complete storage of data which corresponds to the entire temporary backup storage space within the permanent backup storage space. In such embodiments, the deferral policy may relate to the amount of temporary backup storage space that is used for storing backup data and may promote issuance of write commands to the permanent storage space as temporary backup storage resources are approaching (e.g., to various degrees) depletion.

In still further embodiments, according to the deferral policy, within the queue of pending write commands to the permanent backup storage space, priority is given to write commands which form a chunk of recovery-enabling data which corresponds to sequential physical storage locations within the permanent backup storage space (e.g., according to the map of the permanent backup storage space). In further embodiments, the size of the chunk of sequential writes to the permanent backup storage space is also taken into account by the deferral policy. It would be appreciated that sequential writing is generally faster, and in particular writing to a common HDD in sequence is substantially faster than writing to the same HDD out-of sequence.

In still further embodiments, according to the deferral policy, within the queue of pending write commands to the permanent backup storage space, priority is given to write commands which are associated with a data element which was least accessed, e.g., priority is given to destaging recovery enabling data which is associated with a data element which has been accessed the smallest number of times during a certain period of time. In another example, according to the deferral policy, priority is given to write commands which are associated with a data element which was least recently access (the oldest data). Access frequency and/or most recent access times may be used by the deferral policy as indication of likelihood that the data element will be accessed again soon. By anticipating (with at least partial success) rewrites on a certain data element and the resulting updates to the corresponding recovery enabling data within the temporary backup storage. space, it may be possible to reduce the number of writes to the permanent backup storage space, and to improve utilization of the temporary backup storage space and overall performance of the storage system.

In a further example of a possible deferral policy, the deferral policy may take into account services or processes within the storage system or associated with the storage system. In some embodiments, the deferral policy may take into account services or processes which compete for system resource with the destaging process. By way of example, the deferral policy may include a predefined system optimization criterion. The system optimization criterion may relate to at least one resource of the mass-storage system **100** and may prescribe an optimization scheme, an optimization threshold or an optimization function with respect to the system resource(s). According to the deferral policy, and based upon the predefined system optimization criterion, the issuance of a write command to the permanent backup storage space may be deferred for a certain period of time from its initiation or following the system's **100** response the corresponding incoming write command.

In some embodiments, the optimization criterion may relate to one or more system parameters which are associated with the current, past, projected or assumed (e.g., based on statistical data) operation of the system or any of its components, performance of the system or any of its components, capacity of the system or any of its components, priority of a process or services running or pending in the system, the redundancy of the system or of any of its components. The optimization criterion may also relate to the state of the pending write commands to the permanent storage space, including for example, the number of pending write commands in the queue, the aggregate size of pending write commands in the queue, the average amount or mean pendency time of write commands in the queue, the highest pendency time of write commands in the queue, the lowest pendency time of write commands in the queue, the utilization level of the temporary backup storage space, the current, past or projected incoming I/Os (instantaneous or average) rate, etc.. The above parameters are provided by way of example only and are non-limiting. Furthermore, the use of the above parameters is not limited to the system optimization based deferral policy and may be used as part of other implementations of the deferral policy described herein.

The system optimization criterion may allow optimization of the system's resource(s) while maintaining a controlled lag between the storage system's **100** response to the corresponding incoming write command and the issuance of the respective write command to the permanent backup storage space. An example of such an optimization rule may include waiting for the number write commands to the permanent backup storage space to reach a predefined threshold X but wait no longer than a predefined period of time T, since the last response to a write command corresponding to any of the pending write commands to the permanent backup storage space and/or since the initiation of any of the pending write commands.

Having described some details of the deferral policy, the description of **FIG. 2** is now resumed. When a write command to the permanent backup storage space is initiated (at **block 250**) the deferral policy is consulted to determine whether the write command to the permanent backup storage space should be issued. For example, according to the policy, it may be determined whether a priority criterion of the policy is met (**block 260**). In case according to the policy the write command should not yet be issued, the write command to the permanent backup storage space does not take place. In one example, according to the policy, a certain timeout will take place before the parameter(s) of the policy are updated (**block 265**), including for example the priorities of certain pending operations, and the issuance of the write command is reevaluated (**block 260**).

When according to the deferral policy a write command with respect to a certain recovery enabling data is ready to be issued to the permanent backup storage space, the write command is enabled and is issued substantially immediately thereafter (**block 270**). In response to the write command when issued, a copy of the recovery-enabling data to which the write command relates may be substantially permanently stored within the permanent backup storage space (**block 280**). For example, a copy of the recovery enabling data may be stored within NVS module **30A**.

An acknowledge notification indicating the storage within the permanent backup storage space of recovery enabling data corresponding to a certain data element stored within system **100** may be issued (**block 285**). The acknowledgment may be received at the storage system controller **40** and/or at any of its subcomponents.

Before resuming the description of the chart shown in **FIG. 2** further details regarding the permanent backup storage space are provided. As mentioned above, the NVS module **30A** is part of the array of NVS modules **30A-30M.** In some embodiments, the NVS modules in the array **30A-30M** provide the physical storage locations which underlie the permanent backup storage space. The permanent backup storage space is the main backup storage space of the mass storage system **100.** A relatively small portion of the backup data may be substantially temporarily stored within the temporary backup storage space, before the recovery-enabling data is written to the permanent storage space.

As mentioned above, the primary storage space comprises logical storage addresses which are mapped to physical storage locations within the first array of VS modules **10A-10N,** and the primary storage space is the storage area used for storing the entire data-set of the mass storage system **100.** As also mentioned above, the permanent backup storage space is the main backup storage space and it is used to store backup data for a substantially large portion of the data within the primary storage space. According to some embodiments, the physical storage locations underlying the permanent backup storage space are mapped to the physical storage locations underlying the primary storage space. In other embodiments, the physical storage locations underlying the permanent backup storage space are mapped to the logical storage addresses allocated by the mass storage system **100.** It would be appreciated that both of these mapping schemes enable a relatively straightforward correlation between physical storage locations within the primary storage space and the permanent backup storage space. Those of ordinary skill in the art would appreciate the benefits of such correlation, in particular for various operations of the mass storage system according to some embodiments of the present invention, for example, for recovering from data loss on or more of the VS module **10A-10N.**

However, in other embodiments, other mapping schemes may be used for the permanent backup storage space. For example, one may store the backup data accompanied with specific details on where to load the data in case of recovery and to which data elements in the primary storage space each recovery-enabling data element within the permanent backup storage space relates.

In accordance with some embodiments, a write command to the permanent backup storage space may reference a particular (one or more) physical storage location(s) within the primary storage space that is associated with the recovery enabling data. The referenced physical storage location(s) may be the physical locations within the one or more VS module **10A-10N** where the data element associated with the original write command from the hosts **50** was stored. A PB management module **46** may be adapted to map a plurality of physical storage addresses within the array of NVS modules **30A-30M** to a respective plurality of physical storage locations which underlie the primary storage space. Thus, in some embodiments, the permanent backup storage space comprises the plurality of physical storage addresses within the array of NVS modules **30A-30M** allocated to the respective plurality of physical storage locations underlying the primary storage space. In other embodiments, the plurality of physical storage addresses within the array of NVS modules **30A-30M** may be mapped to the logical storage addresses provisioned by the mass storage system **100,** and the write command to the permanent backup storage space may reference a particular (one or more) logical storage address(es), for example, the logical storage address(es) referenced in the original write command from the hosts **50.**

Resuming the description of the embodiments of the invention illustrated by **FIG. 2****,** as mentioned above, an acknowledge notification indicating the storage of recovery-enabling data within the permanent backup storage space may be issued, for example, by the PB management module **46.** The write acknowledgment from the NVS module **30A** may initiate release of the storage resources on the VS module **11A** which have been substantially temporarily allocated for the recovery-enabling data (**block 290**) that is now substantially permanently stored on NVS module **30A** (or for which a corresponding recovery-enabling data is now stored on NVS module **30A**). In some embodiments, the acknowledgment may be received at the TB management module **44.** The acknowledgment that certain recovery enabling data was successfully stored within the permanent backup storage space may cause the TB management module **44** to release the storage resources within the temporary backup storage space that have been allocated to temporarily storing the corresponding copy of the recovery-enabling data, rendering them available again for subsequent storage of data.

It would be appreciated that the illustration in **FIG. 1** of the first array of VS modules **10A-10N** underlying the primary storage space and the array of VS modules **11A-11S** underlying the temporary backup storage space as being two physically distinct arrays residing on separate racks or blade servers is non-limiting. In other embodiments, VS modules from the first array **10A-10N** may be fitted within the same hardware rack or blade server with VS modules from the second array of VS modules **11A-11S.** Similarly, NVS modules **30A-30M** which underlie the permanent backup storage space may be fitted within the same hardware rack or blade server with VS modules from the first array **10A-10N** and/or with VS modules from the second array of VS modules **11A-11S.**

In still further embodiments, the resources of a single VS device or module may be divided among the primary storage space and the temporary backup storage space, with certain physical storage locations being allocated for primary storage and other physical storage locations within the same VS device or module allocated for substantially temporary backup storage. In such cases, by way or example, physical storage locations on a first VS module that are associated with the primary storage space are protected by physical storage locations associated with the temporary backup storage space which are allocated on a different VS device. Further by way of example, the physical storage locations associated with the temporary backup storage space are provided by VS modules which are located on different blade servers relative to the VS modules which provide the respective physical storage locations allocated to the primary storage space.

The architecture of the mass storage system **100** shown in **FIG.** 1 represents one aspect of the invention, where the primary storage space is mapped to a first plurality of VS devices (or portions thereof), the temporary backup storage space is similarly mapped to a second plurality of VS devices (or portions thereof). However, it would be appreciated that according to other embodiments, some NVS devices may be used in combination with some VS devices for allocating physical storage locations to the primary storage space and/or allocating physical storage locations to the substantially temporary backup storage space.

It would be appreciated that throughout the process described in **FIG. 2** protection of the data element with at least one copy of corresponding recovery-enabling data is never compromised. It would be further appreciated, that throughout the backup process described above, in which recovery-enabling data within the temporary backup storage space is replaced with corresponding recovery-enabling data within the permanent backup storage space, and the subsequent release of the storage resources within the temporary backup storage space that were used for substantially temporarily storing the recovery-enabling data therewithin, the protection of the corresponding data element within the primary storage space is not compromised and there is always at least one segment of data which protects the data element, and that even in case of severe power interruption the backup data can be stored within a NVS storage medium before the system is gracefully shut-down. In some embodiments, at the same time - and without compromising data availability and data protection, a performance advantage may be achieved, since the storage system **100** can acknowledge the write command after it has been stored within the permanent storage space and the temporary backup storage space which can be based on relatively high performing storage devices and does not have to wait for storage within the permanent backup storage space which may be based on slower storage devices. Furthermore, the cost associated with the additional storage resources which may be required in order to facilitate some embodiments of the proposed invention, may be relatively low, since the storage resources underlying the temporary backup storage space can be recycled and reused. The deferral policy provides a controlled routine for storing data within the permanent backup storage space with a minimal or no impact on system performance, and balances the release of the storage resources within the temporary backup storage space. The policy can reduce the likelihood of storage resources availability within the temporary backup storage space being depleted and the resulting write activity slowdown.

Thus, some embodiments of the proposed invention provide a desirable balance between a storage system's performance level, reliability (data availability and data protection) and cost.

In still a further aspect of the invention, there is provided a storage system controller comprising a PS management module, a TB management module and a PB management module. The PS management module is adapted to allocate physical storage locations on a first plurality of VS modules for persistently storing a data set of the mass-storage system thereon. The TB management module is adapted to allocate physical storage resources on a second plurality of VS modules for substantially temporarily storing recovery-enabling data which corresponds to a relatively small portion of the data-set of the storage system. The PB management module is adapted to allocate physical storage resources on a plurality of NVS modules for substantially permanently storing recovery-enabling data which corresponds to a relatively large portion of the data-set of the storage system. In further embodiments, the PB management module is adapted to allocate physical storage resources for substantially permanently storing recovery-enabling data which corresponds to the entire data-set of the storage system. The PS management module is responsive to receiving an incoming write command related to a data element for causing a first copy of the data element to be substantially permanently stored in one or more physical storage locations on one or more VS modules from the first plurality of VS modules. The TB management module is responsive to receiving the write command for causing a first copy of recovery-enabling data corresponding to the element to be stored in one or more physical storage locations on one or more VS modules from the second plurality of VS modules. Upon storage of the first copy of the data element and the corresponding first copy of the recovery enabling data within the first and the second plurality of VS modules, respectively, the storage system controller is adapted to issue a write acknowledgment notification with respect to the write command. The storage system controller is further adapted to initiate a write command to the PB management module substantially immediately upon the storage system's response to the original write command. The storage controller may be configured to defer the issuance of the initiated write command to the PB management module for a controlled period of time (e.g., from the storage system's response to the incoming write command). Thus, the write command to the PB management is asynchronous with the storage system's response to the write command.

The PB management module is responsive to the write command being issued for causing a second copy of the recovery-enabling data to be substantially permanently stored in one or more physical storage locations on one or more NVS modules from the plurality NVS modules.

In some embodiments, the TB management module is responsive to an indication that the second copy of the recovery-enabling data was stored on the one or more NVS modules for releasing the physical storage locations allocated for storing the first copy of the recovery-enabling data.

In some embodiments, during the operation of the mass storage system, the recovery enabling data within the plurality of VS modules associated with the TB management module and within the plurality of NVS modules associated with the PB management module correspond to the entire (and the current) data set of the storage system.

In some embodiments, the PS management module may map the plurality of physical storage locations on the first plurality of VS modules to a respective plurality of logical storage addresses, and the storage system controller may provision the logical storage addresses to one or more hosts associated with the storage system.

Having described some general aspects of a storage system and some embodiments of the present invention, there is now provided, in accordance with further embodiments of the invention, a detailed description of certain features of the of the proposed storage system and of the proposed method of managing a storage system.

In the following description, in accordance with certain embodiments of the invention, the mass storage system is essentially described as a SAN (Storage Area Network) mass storage system which utilizes the SCSCI storage interface protocol. However, other embodiments of the present invention are not limited to this particular network storage architectures and configuration. For example, in one embodiment, a NAS (Network Attached Storage) architecture may be implemented over the SAN architecture described herein. Other storage system architectures and configurations may be readily devised by those versed in the art based on the disclosure provided herein.

According to some embodiments of the invention, there is now provided a description of a storage system in which there is implemented a storage system controller for managing storage of data with the storage system. One example of a possible implementation of the storage system controller is shown in **FIG. 1****,** where a storage system controller **40** is shown which manages the physical storage devices within the storage system, including the arrays of non-volatile VS modules **10-10N** and **11A-11S** and the array of NVS modules **30A-30M,** the interaction between the physical storage devices and the interaction between the storage system **100** and one or more hosts **50** that are connected to and serviced by the storage system **100.**

As mentioned above, according to some embodiments, the storage controller **40** may include a PS management module **41.** The PS management module **41** may be adapted to allocate and manage the primary storage space of the mass storage system **100.**

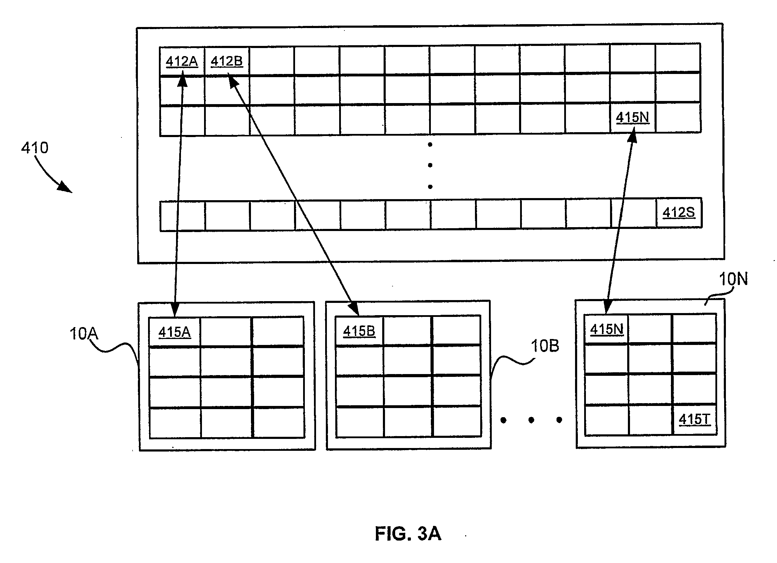

In addition to the continued referenced to **FIG. 1****,** reference is now made to **FIG. 3A** which is a graphical illustration of a primary storage space map utilized by way of example by a PS management module, according to some embodiments of the invention. It would be appreciated that the map of the primary storage space shown in **FIG. 3A** is a graphical illustration of a corresponding data structure which may be stored in a storage device and which may be queried and otherwise accessed to determine, for example, a correlation between a logical storage address and details of a corresponding physical storage location and possibly in reverse. The data structure may take on many forms as is known in the art.

The primary storage space comprises the physical storage locations allocated for primary storage within the mass storage system **100.** The PS management module **41** holds a map of the primary storage space **410** which includes the full set of logical storage addresses **412A-412S** available to the mass storage system **100** for storing data within the system **100.** The logical storage space that is provisioned by the mass storage system **100,** for example to one or more hosts **50** associated with the storage system **100,** may comprise the logical storage addresses **412A-412S** in the primary storage space map **410.**

The map of the primary storage space **410** also includes a plurality of physical storage locations **415A-415T.** Each one of the logical storage addresses **412A-412S** in the primary storage space map **410** is mapped to one or more physical storage locations **415A-415T.** Thus, for each logical storage address **412A-412S** in the primary storage space map **410,** the map **410** provides one or more physical storage locations **415A-415T** which are allocated for substantially permanently storing data associated with the respective logical storage address in the storage system **100.** Thus, given a specific logical storage address(es) the respective physical storage locations can be determined.

In some embodiments, the PS management module **41** and/or the map of the primary storage space **410** may be implemented as a distributed component. Instead of one map **410** which includes the full set of logical storage addresses **412A-412S** and the full set of physical storage locations **415A-415T** available to the mass storage system **100** for storing data within the system **100,** several maps may be used. Each one of the maps may possibly map a portion of the full set of logical storage addresses **412A-412S** to a corresponding portion of the full set of physical storage locations **415A-415T** available to the mass storage system **100** for storing data within the system **100,** and in combination, the maps may map the full set of logical storage addresses **412A-412S** to the full set of physical storage locations **415A-415T** available to the mass storage system **100** for storing data within the system **100.**

In still further embodiments, there may be some overlap between the partial maps of the primary storage space. One partial map of the primary storage space may provide full or partial backup to another partial map. Possibly, each partial map may be fully or partially backed up by one or more other partial maps. The maps may be synchronized with one another and may be inter-compatible. Similar distributed management modules and/or maps may be implemented for the temporary backup storage space and/or for the permanent backup storage space.

It would be appreciated that the distributed implementation of the PS management module **41** and/or the map of the primary storage space **410** may be applied to any other controller, management module or map within the mass storage system **100,** mutatis mutandis. For simplicity the following description shall be made with reference to a storage system wherein there is implemented a single PS management module **41** and central map of the primary storage space **410.** For similar reasons, other controllers, management modules and maps are also described as single units.

In some embodiments, in addition or as an alternative of the elaborate map of the primary storage space **410,** the PS management module **41** may be adapted to implement a mapping function which receives as a parameter a certain logical storage address, e.g., **412A,** and returns one or more corresponding physical storage locations, e.g. **415B,** which are uniquely associated with the input logical storage address. According to some embodiments, in a similar manner, the mapping function may return a logical storage address for a given (one or more) physical storage addresses.

The physical storage locations **415A-415T** underlying the primary storage space are collectively the storage resources available for substantially persistently storing data within the mass storage system **100** and I/O commands are referred to the appropriate physical storage locations among the physical storage locations **415A-415T** allocated for the primary storage space.

In other embodiments, the mass storage system **100** includes several primary storage spaces and for all or some of the primary storage spaces there is included a corresponding temporary backup storage space and permanent backup storage space, all of which are managed in accordance with the teachings of the present invention. In this case, the storage system **100** may include several clusters of storage space and one or more of the clusters may include a primary storage space together with corresponding temporary backup storage space and permanent backup storage space. Under such implementation, the physical storage resources underlying the primary storage space collectively provide the storage resources available to the mass storage system **100** for persistently storing data within the respective cluster of the mass storage system **100.**

In some embodiments, the physical storage locations **415A-415T** of the primary storage space are located on a first array of VS modules **10A-10N.** Optionally, only some of the storage resources of a VS module from among VS module **10A-10N** are allocated to the primary storage space, rather than the entire VS module. In further embodiments, the VS modules **10A-10N** are allocated in their entirety to the permanent storage space.

In some embodiments, each logical storage address **412A-412S** represents a fundamental (atomic) unit of storage in the permanent storage space. However, in further embodiments, more than one data element can be stored at each logical storage address **412A-412S.**

Each physical storage location **415A-415T** may correspond to one bit or byte or to a predefined number of bits or bytes.

In some embodiments, the PS management module **41** may be a distributed component and several sub-modules may hold partial or complete maps of, or utilize mapping functions for part of or the entire primary storage space. For simplicity, the following description shall be made with reference to a storage system wherein there is implemented a single map of the primary storage space **410.**

The PS management module **41,** either directly or via the storage system controller **40,** may provision the logical storage addresses **412A-412S** allocated by the PS management module **41** as part of the primary storage space (or at least a portion of the logical storage addresses, for example in case of thin provisioning) to one or more hosts **50** associated with the storage system **100** or some intermediate unit, system or subsystem, for example, but not limited to a Storage Area Network (SAN) subsystem.

As mentioned above, LUs may be created, for example, by the storage system controller **40.** Each LU may be comprised of a plurality of logical storage addresses (commonly referred to as LBAs) from the primary storage space (for example some or all of the logical storage addresses **412A-412S**), with each logical storage address within each LU being associated with specific physical storage locations within one or more VS modules from the first array **10A-10N.** The storage system controller **40** may provision the LUs to the hosts **50,** providing the hosts with the information necessary for interacting with the mass storage system **100.** The hosts may issue read and write commands to the mass storage system **100** with each command or sequence of commands (e.g., a batch of commands) referencing one or more LUs and logical storage addresses (e.g., LBAs) to which the command(s) relates.

Upon receiving an I/O command at the storage system **100,** whether it be a read or write command or any other command, the primary storage space control module **41** may lookup the physical storage locations associated with the logical storage addresses to which the command relates and may service the command vis-à-vis the physical storage locations mapped to the logical storage addresses referenced by the command.

In response to a write command being received at the mass storage system **100,** the PS management module **41** may lookup the logical storage location(s) associated with the incoming write command and may write a copy of the data element to which the write command relates at the logical storage location(s) associated with the logical storage address(es) referenced by the write command. According to some embodiments, in accordance with the primary storage space map **410,** the PS management module **41** may instruct a first VS module **10A** whereon the physical storage location associated with the logical storage address(es) referenced by the write command is located to store the data element or some portion there to which the write command relates. In further embodiments, the first VS module **10A** is among the first array of VS modules **10A-10N** whose physical storage locations are allocated to the primary storage space.

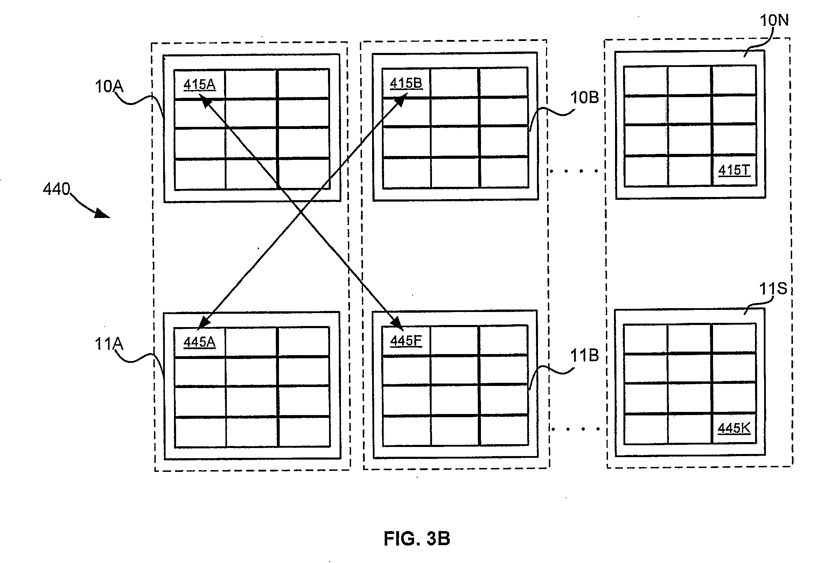

As was mentioned above, further in response to receiving the write command at the mass storage system **100,** a first copy of recovery-enabling data corresponding to the data element to which the write command relates may be substantially temporarily stored within a temporary backup storage space of the mass storage system. Reference is now made to **FIG. 3B** which is a graphical illustration of a temporary backup storage space map utilized by way of example by a temporary backup management module, according to some embodiments of the invention. It would be appreciated that the map of the temporary storage space shown in **FIG. 3B** is a graphical illustration of a corresponding data structure which may be stored in a storage device and which may be queried and otherwise accessed to determine, for example, a correlation between a logical storage address or a physical storage location within the primary storage space and details of a corresponding physical storage location, and possibly in reverse. The data structure may take on many forms as is known in the art.

The temporary backup storage space may comprise a plurality of physical storage locations **445A-445K.** The physical storage locations **445A-445K** underlying the temporary backup storage space collectively constitute the storage resources available to the mass storage system **100** for temporarily storing backup data.

In some embodiments, the temporary backup storage space may be managed at the physical storage location level. For example, the TB management module **44** may be configured to associate each of the physical storage locations **445A-445K** within the temporary backup storage space with a corresponding physical storage location within the primary storage space **410.** In further embodiments, the correlation is between groups of physical storage locations of a predefined size from the primary storage space (e.g., a predefined number of physical storage locations) and one or more respective physical storage locations from the temporary backup storage space for each such group. In some embodiments, a segment consisting of one or more physical storage locations in the backup storage space is correlated with a number of corresponding segments in the primary storage space which collectively corresponds to a larger amount of storage space relative to the respective temporary backup storage space segment, and which are usable for storing more data than can be stored at once within the respective temporary backup storage space segment.

In some embodiments, the TB management module **44** may include a map of the temporary backup storage space **440** in which each (one or a group) of the physical storage locations **445A-445K** in the temporary backup storage space is mapped to one or more (a single or a group) corresponding physical storage locations **415A-415T** within the primary storage space.

In other embodiments, the TB management module **44** may include a map of the temporary backup storage space **440** in which each (one or a group) of the physical storage locations **445A-445K** in the temporary backup storage space is mapped to one or more (a single or a group) corresponding logical storage addresses **412A-412S** within the primary storage space.

In still further embodiments, each one of the VS modules associated with the temporary backup storage space **11A-11S** is associated with one or more VS modules of the primary storage space **10A-10N,** and the map of the temporary backup storage space **440** may allocate for each one of the VS modules associated with the temporary backup storage space **11A-11S** one or more corresponding VS modules of the primary storage space or vice-versa.

According to one configuration of the mass storage system **100,** temporary backup storage space VS modules **11A-11S** and primary storage space VS modules **10A-10N** may be installed in Blade servers. Temporary backup storage VS modules may be used to protect the data on primary storage space VS modules located on different Blade servers, so that in case an entire server is lost including the primary storage space VS modules installed thereon, the VS modules backing up (at least partially) the lost primary space VS modules are less likely to be also lost.

Whenever a data element is written into the primary storage space (including an update of a previous version), corresponding recovery enabling data is written on the temporary backup VS module that is associated with the primary storage VS module in which the data element is stored.

As mentioned above, the physical storage location within the primary storage space where a data element to which a write command relates that is allocated for storing the data element within the mass storage system **100** may be based on the logical storage address referenced by or otherwise associated with the write command. The storage location of the corresponding recovery enabling data within the temporary storage space may be associated with the primary storage VS module within which the data element was stored or which is designated for storing the data element therein.

In some embodiments, the TB management module **44** may assign a temporary backup write command to the temporary backup VS module associated with the primary storage VS module where the corresponding data element was written or which is designated for storing the data element.

In some embodiments, the temporary backup VS module to which the temporary backup write command was assigned may manage its physical storage resources (locations) internally. For example, each temporary backup VS module may include a device management module (not shown) and upon receiving a temporary backup write command the device management module may independently designate the physical storage locations within the temporary backup VS module where the recovery-enabling data is to be stored.

The inventors of the present invention contemplate several possible implementations of the proposed storage system wherein the temporary backup storage is managed in accordance with one of several possible management schemes and the selection of the storage location within the temporary backup storage space is performed in one of several possible ways. In the following description, by way of non-limiting example, there is a focus on one particular management scheme whereby physical storage locations within the temporary backup storage space are associated with physical storage locations with the primary storage space and a map of the temporary storage space is provided wherein physical storage locations within the temporary backup storage space are allocated to respective physical storage locations within the primary storage space. Those of ordinary skill in the art would readily be capable of implementing any one of the proposed management schemes as part of a storage system according to various embodiments of the present invention.

According to some embodiments, the map of temporary storage space **440** may be dynamically updated to reflect at any point in time which physical storage locations **442A-442K** are presently allocated for storing recovery-enabling data. According to further embodiments, whenever storage resources are required for temporarily storing new recovery-enabling data, the map of temporary storage space **440** may be consulted and an appropriate physical storage location(s) may be selected based on the current state of the map **440.** However, according to some embodiments, in case an incoming write command (e.g., from a host **50**) relates to a data element that is already stored within the storage system **100,** for example, when a data element which already existed in the storage system **100** (and was already part of a previous data-set of the storage system **100**) is modified, the TB management module **44** may store the updated recovery-enabling data at the same location within the temporary storage space as the old recovery-enabling data that was associated with the previous version of the data element. The old recovery-enabling data may thus be overwritten with the new and updated recovery-enabling data.

It would be appreciated that in case the old recovery-enabling data is no longer within the temporary backup storage space, the map of temporary backup storage space **440** may be consulted and an appropriate physical storage location(s) may be selected for the new recovery-enabling data based on the current state of the map **440.** The selected physical storage location for the new recovery-enabling data may be the storage location that was used for storing the old recovery-enabling data or a different physical storage location(s) may be selected.

In some embodiments, the TB management module **44** and/or the map of the temporary backup storage space **440** may be implemented as a distributed component.

As a further alternative or in addition to the map of the temporary backup storage space **440,** the TB management module **44** may utilize a mapping function to determine the correlation between a given physical storage address (or addresses) within the primary storage space and the respective physical storage location within the temporary backup storage space. In other embodiments, the mapping function may be adapted to determine the correlation between a given logical storage address and corresponding physical storage address(es) within the temporary backup storage space.

For example, the TB management module **44** may use the mapping function to determine for any given physical storage location (or sequence of addresses) within the primary storage space the physical storage location within the temporary backup storage space that is to be allocated for (temporarily) protecting the data stored at the given physical storage location.

It would be appreciated that since in accordance with some embodiments, the temporary backup storage space is substantially smaller (in terms of capacity for example) than the primary storage space, and the mapping function (or map) used by the temporary storage space may be capable of accounting for occupied and/or available physical storage locations within the temporary backup storage space, so that, for new backup data (as opposed to overwrite), the physical storage location(s) that is allocated for storing the backup data is selected from amongst the physical storage locations which are currently available, or in case a mapping function is used, the function is configured to return physical storage location(s) which are available for storing the backup data. A hashing function may be used, possibly in conjunction with a hashing table, to return an available physical storage location(s) within the temporary backup storage space given a physical storage location within the primary storage space where the respective data element (that is to be protected) is stored.

The permanent backup policy mentioned above may take into account the usage level of the physical storage locations **445A-445K** in the temporary backup storage space. For example, in case the space physical storage locations **445A-445K** in the temporary backup storage space are approaching full usage, meaning that there is not much space left for temporary backup storage of further incoming data, the deferral policy may assign higher priority to pending write commands to the permanent backup storage space. It would be appreciated that writing more data into the permanent backup storage space and at a higher rate may contribute to a reduction in the usage level of the physical storage locations **445A-445K** within the temporary backup storage by enabling the release of physical storage locations used for temporarily storing data which is now permanently stored within the permanent storage space.

In addition to the mapping function, the temporary backup storage space management module **44,** may include and utilize a dynamically updating look-up-table (LUT). Each time a certain physical storage location is allocated for temporarily storing recovery-enabling data, the allocation may be recorded in the LUT, and when the physical storage location is released, the LUT may be updated to reflect that the storage location is now available again for storing new recovery-enabling data. Whenever storage resources are required for temporarily storing new recovery-enabling data within the temporary backup storage space, the LUT, possibly in combination with the map **440** and/or or the corresponding mapping function may be consulted, and at least in part based on the current state of the LUT an appropriate storage location may be selected.

As was mentioned above, in response to a write command being received at the mass storage system **100,** the PS management module **41** may be adapted to cause a copy of the data element to which the write command relates to be stored on a first VS module **10A.** According to some embodiments, further in response to the write command, the TB management module **44** may be adapted to cause a first copy of recovery-enabling data corresponding to the data element to which the write command relates to be stored on a second VS module **11A.** The first VS module may be part of a first array of VS modules **10A-10N** which are associated with the primary storage space and the second VS module **11A** may be part of a second array of VS modules **11A-11S** which are associated with the temporary backup storage space.

Optionally, a single VS module may be used a source of physical storage locations for the primary storage space and for the temporary backup storage space as well. The respective maps **410** and **440** of the two storage spaces may designate which resources on the VS module, e.g., which physical storage locations, are allocated to each storage space.

As was also mentioned above, the physical storage locations within the temporary backup storage space that are used for storing the recovery enabling data which corresponds to a certain data element are correlated to the physical storage location(s) within the primary storage space where the data element is stored. Thus, in some embodiments, when the PS management module **41** determines the physical storage location(s) within the primary storage space that is (are) associated with a certain incoming write command, an indication with regard to the designated physical storage location(s) may be forwarded to the TB management module **44.** Upon receipt of the indication, the TB management module **44** may allocate, based on the information with regard to the designated physical storage location(s) within the primary storage space, a corresponding physical storage location(s) within the temporary storage space where the respective recovery enabling data is to be temporarily stored.

The information with respect to the physical storage locations allocated for storing a data element to which an incoming write command relates may be provided to the TB management module **44** either before or after the data element is actually stored within the primary storage space.

As was mentioned above, once the data element is stored within the primary storage space and a copy (or corresponding recovery enabling data) is stored within the temporary backup space, the write command is acknowledged. In some embodiments, in response to a first indication and a second indication, the first indication received from the PS management module **41** indicating that a certain data element to which a write command received at the mass storage system **100** relates was successfully stored within the primary storage space and the second indication received from the TB management module **44** indicating that recovery-enabling data corresponding to the data element was successfully stored within the temporary backup storage space, the storage system controller **40** may be adapted to acknowledge the write command. In one example, the storage system controller **40** may communicate an acknowledgment notification to the source of write command, e.g., one of the hosts **50** associated with the mass storage system **100.**

As mentioned above, in some embodiments, in order for a write command to be acknowledged and for a data element to which the write command relates to become part of the data set of the storage system, the data element must be successfully stored within the primary storage space and the corresponding recovery enabling data must be successfully stored within the temporary backup storage space. If the writing of the data element and/or the corresponding recovery enabling data fails, the respective write command received at the storage system **100** will be deemed failed. In case of a failed write command, the data within the primary storage space and/or within the temporary storage space may be rolled back. It would be appreciated that the writing of corrupted data is also considered a failed write.

According to some embodiments, as part of rolling back the recovery-enabling data, the storage system controller **40** may cause a reattempt of the generation (e.g., computation) and/or the storage of the recovery-enabling data.

According to some embodiments, in addition to the reattempt, the I/O command shall not be acknowledged or a failure notice may be issued with respect to the I/O command. In other embodiments there will be no attempt to roll back the failed IO command and the IO shall not be acknowledged or a failure notice may be issued with respect to the I/O command.

In some embodiments, if either of the PS management module **41** and the TB management module **44** determines that a certain data element and/or certain recover-enabling data is to be written across several (two or more) physical storage locations within the temporary storage space, and writing to some of the designated physical storage locations failed for some reason, the storage system controller **40** may cause a full or partial roll-back of the data.

According to some embodiments, the storage of a copy of certain recovery-enabling data within the permanent backup storage space, e.g., on a NVS module, may cause the release of the storage resources used for temporarily storing the copy of the same recovery-enabling data within the temporary backup storage space. For example, the release of the storage resources used for temporarily storing a copy of some recovery-enabling data within the temporary backup storage space may be initiated by an acknowledge notification indicating the permanent storage of a copy of the recovery-enabling data within the permanent backup storage space.

Once the temporary backup storage resources are released, they may be once more allocated for temporarily storing recovery-enabling data within the temporary backup storage space. According to some embodiments, each time a certain physical storage location (or group of physical storage locations) within the temporary backup storage space is allocated, the recovery-enabling data stored therein may be different, and may correspond to a different data item.

Having described embodiments of the invention related to the management of the primary storage space and to the management of the temporary backup storage space, there is now provided a description of embodiments of the invention which relates to the management of the permanent storage space.

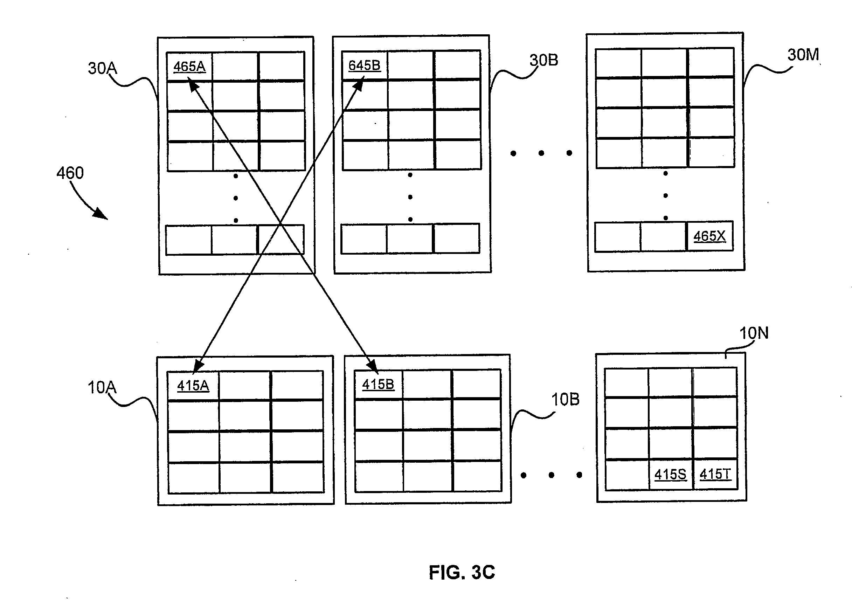

Reference is now additionally made to **FIG. 3C** which is a graphical illustration of a permanent backup storage space map utilized by way of example by a PB management module , according to some embodiments of the invention. It would be appreciated that the map of the permanent storage space shown in **FIG. 3C** is a graphical illustration of a corresponding data structure which may be stored in a storage device and which may be queried and otherwise accessed to determine, for example, a correlation between a logical storage address and details of a corresponding physical storage location and possibly in reverse. The data structure may take on many forms as is known in the art.

The permanent backup storage space may be managed and controlled by the PB management module **46** which may be adapted to allocate and manage the permanent backup storage space of the mass storage system **100**.

In some embodiments, and as is shown in **FIG. 1** for example, the PB management module **46** may be responsible for the entire permanent backup storage space. The PB management module **46** may hold a map of the entire permanent backup storage space that is allocated for substantially permanently storing recovery-enabling data, as will be described below.

As was mentioned above, according to some embodiments, a write command to the permanent backup storage space may be initiated substantially immediately upon responding to the write command by the mass storage system **100**, and the storage system response may be any one (or a combination) of the following: storing a copy of the data element to which the write command relates within the primary storage space; storing recovery-enabling data corresponding to the data element associated with the write command within the temporary backup storage space; and issuing an acknowledgment notification for acknowledging the respective write command.

A deferral policy is implemented for setting controlled time-period during which an initiated write command to the permanent backup storage space is deferred. The deferral policy may control the issuance of a write command to the permanent backup storage space and may be used to limit the performance penalty associated with execution of the write commands to the relatively slow NVS modules associated with the permanent backup storage space. Various details of the deferral policy were discussed above and additional embodiments of the invention which are related to the deferral policy are described below.

The primary storage space is the storage area used for storing the entire data set of the mass storage system **100** and it comprises logical storage addresses **412A-412S** which are mapped to physical storage locations **415A-415T.** The permanent backup storage space is the main backup storage space and it is used to store backup data for a substantially large portion of the data within the primary storage space.

According to some embodiments, the permanent backup management module **46** holds a map of the permanent storage space **460.** The map of the permanent storage space **460** includes details of each one of the physical storage locations **465A-465X** available within the mass storage system **100** for permanently storing backup data.

In some embodiments, the PB management module **46** and/or the map of the temporary backup storage space **460** may be implemented as a distributed component.

In addition or as an alternative to the map of the permanent storage space **460,** the permanent backup management module **46** may utilize a mapping function. For example, the map of the permanent storage space **460** may utilize a mapping which receives as a parameter a certain physical storage location(s) (or a logical storage address(es)) within the primary storage space and returns one or more physical storage locations within the permanent storage space which are uniquely associated with the input storage location(s).

In some embodiments, the permanent backup storage space is associated with an array of NVS modules **30A-30M,** and physical storage locations **465A-465X** associated with the permanent backup storage space are provided by the NVS modules array **30A-30M**.

Optionally, only some of the storage resources of an NVS module are allocated to the permanent backup storage space, rather than the entire the NVS module. For example, only a portion of the physical storage locations of one or more of the NVS modules in the array **30A-30M** are allocated to the permanent storage space.

In further embodiments, the NVS modules **30A-30M** are allocated in their entirety to the permanent backup storage space.

As mentioned above, in further embodiments, the mass storage system **100** may include several clusters storage, and one or more of the clusters of storage may include a primary storage space and corresponding permanent backup storage space and temporary backup storage space. Under such implementation, the physical storage resources underlying the permanent backup storage space collectively provide the storage resources available to the mass storage system **100** for substantially permanently storing backup data within the respective cluster of the mass storage system **100**.

The map of the permanent backup storage space **460** includes details of the physical storage locations **465A-465X** associated with the permanent backup storage space.

In one embodiment, the permanent backup storage space map **460** maps the physical storage locations **465A-465X** associated with the permanent backup storage space to the physical storage locations **415A-415T** allocated for the primary storage space.

In a further embodiment, the map of the permanent backup storage space **460** maps the physical storage locations **465A-465X** associated with the permanent backup storage space to the logical storage addresses **412A-412S** provisioned by the mass storage system **100**.

According to further embodiments, the map of the permanent backup storage space **460** is implemented in compliance with a storage interface-protocol, for example, the same storage interface protocol that is implemented by the PS management module **41**. For example, some or all of the physical storage locations **465A-465X** associated with the permanent backup storage space may be allocated to the LBAs and LUs provisioned by the mass storage system **100** to the hosts.

In other embodiments, the physical storage locations **465A-465X** associated with the permanent backup storage space may be allocated to the internal LBAs and internal LUs which are used as an interface between the primary storage space and the permanent backup storage space. This interface is used by the PB management module **46** to determine the physical storage location(s) allocated to a physical storage location or to a logical storage address within the primary storage space. The internal LBAs and internal LUs may be different from the LBAs and LUs provisioned by the mass storage system **100** to the hosts. In one example, each internal LU provisioned by the PB management module **46** corresponds to an entire (one or more) VS module associated with the primary storage space. Each internal LBA provisioned by the PB management module **46** may correspond to one or more physical storage locations within the VS module for which the respective LU is allocated.

The map of the permanent backup storage space **460** may associate each one of the physical storage locations **465A-465X** associated with the permanent backup storage space with one or more corresponding physical storage locations **415A-415T** associated with the primary storage space or with one or more logical storage addresses **412A-412S** allocated by the mass storage system **100**.

In further embodiments, the map of the permanent backup storage space **460** may relate to groups of physical storage locations (or to groups of logical storage address(es)) (such a group of physical storage location is also referred to herein as chunks of physical storage location), each group comprising a predefined number of physical storage locations within the permanent backup storage space, and each such group is mapped to one or more corresponding physical storage locations **415A-415T** within the primary storage space or to one or more logical storage addresses **412A-412S** provisioned by the mass storage system **100**.

For convenience in the following description, by way of non-limiting embodiments, the physical storage locations **465A-465X** within the permanent backup storage space are described as being associated with one or more corresponding physical storage locations **415A-415T** associated with the primary storage space

In some embodiments, each physical storage location (or each or group of physical storage locations) within the permanent backup storage space may be associated with more than one corresponding physical storage location (or more than one group of physical storage locations) within the primary storage space or with more than one logical storage address (or more than one group/chunk of physical storage locations), and the map of the permanent backup storage space **460** may hold for each physical storage location (or group of physical storage locations) within the permanent backup storage space details with regard to the physical storage locations or logical storage addresses that are associated with the respective physical storage location (or group of physical storage locations).

In one example, a physical storage location within the permanent backup storage space, say the physical storage location referenced **465A,** may store parity data which corresponds to the data stored at the primary storage space at a plurality of physical storage locations within the primary storage space, say the physical storage locations referenced **415A, 415B, 415S** and **415T.** In some embodiments, if each physical storage location (or each group of physical storage locations) within the permanent backup storage location protects several corresponding physical storage locations (or groups of physical storage locations) within the primary storage space, the permanent backup storage space map **460** may include in connection with each physical storage location (or group of physical storage locations), a reference to each one of the respective physical storage locations (or groups of physical storage locations) within the primary storage space. This information may facilitate full protection of the data-set of the storage system in the permanent backup storage space, as will be described in further detail below.

Further by way of example, the permanent backup storage space may implement any RAID configuration which provides redundancy and protection for the data stored within the primary storage space. Examples of RAID configurations which provide redundancy and protection for the data stored within the primary storage space include parity RAID and full mirroring RAID configurations, such as RAID 1, RAID 5, RAID 4 RAID 6 and various proprietary RAID configurations as non-limiting examples.

Continuing with the description of some embodiments of the invention which are related to the operation of the permanent backup storage space, in response to receiving a command for writing certain recovery enabling data into the permanent storage space, the management module of the permanent backup storage space **46**, may determine which physical storage locations within the permanent backup storage space are associated with the write command. In some embodiments, the write command may reference a particular (one or more) physical storage location(s) (or logical storage address(es)) within the primary storage space that are associated with the recovery enabling data to which the instant write command relates. The referenced physical storage location(s) may be physical locations within the first array of VS modules **10A-10N** where the data element associated with the original write command from the hosts **50** was stored.

For example, information incorporated within or otherwise associated with the write command to the permanent backup storage space may indicate that the recovery enabling data to be written into the permanent backup storage space is associated with the primary storage space physical storage location referenced **415B**. The management module of the permanent backup storage space **46** may determine that the primary storage space physical storage location referenced **415B** is associated with the permanent backup storage space physical storage location referenced **465A**. Possibly, permanent backup storage space physical storage location referenced **465A** is associated with a group of primary storage space physical storage location, and the physical storage location **415B** is a member of that group.

By way of example, backup storage space physical storage location referenced **465A** is located on the NVS module referenced **30A,** and the management module of the permanent backup storage space **46** instructs the NVS module referenced 30A to store the recovery enabling data associated with the write command at the physical storage location referenced **465A.**

The reference data associating physical storage locations within the permanent backup storage space with respective physical storage locations (or logical storage addresses) within the primary storage space may be used in case of data loss or data corruption in the primary storage space, and may enable recovery of lost or corrupted data, as is described in greater detail below.

The PB management module **46** may record in connection with physical storage location(s) within the permanent backup storage space that was modified as a result of the write command, which physical storage location(s) (or logical storage address(es)) within the primary storage space is associated with the update. The update may refer to storage of new data into a previously "empty" physical storage location or to overwrite of previously stored data. It would be appreciated that the data with respect to the primary storage space physical storage location(s) (or logical storage address(es)) may facilitate, in conjunction with recovery-enabling data (such as parity data, for example) recovery of lost or corrupted data within the primary storage space.

According to further embodiments, the recovery-enabling data that is stored within the permanent backup storage space may differ in some way from the respective recovery-enabling data within the temporary backup storage space. The write command to the permanent backup storage space may reflect the difference in the format or nature of the recovery-enabling data and may differ from the command that was issued for storing the respective recovery-enabling data within the temporary backup storage space. In further embodiments, a certain recovery enabling-data item within the temporary backup storage space may undergo a series of changes (two or more) before a write command with respect to the corresponding data item is issued to the permanent backup storage space for storing corresponding recovery enabling therein. In such cases, a write command may be issued to the permanent backup storage space with respect to each version of the recovery-enabling data item, or in further embodiments of the invention, a write command may be issued to the permanent backup storage space with respect to only the current version of the recovery-enabling data.

In a further embodiment, whenever a write command is received at the mass storage system **100** which relates to a new or modified data element, and a parity data or similar technique is used to protect the data within the primary storage space, the system storage controller **40** may determine which other physical storage location(s) (or the logical storage address(es)) are part of a group that is collectively protected by a common recovery enabling data element, e.g., parity data. The storage system controller **40** may calculate the new parity data for the group of physical storage location(s) (or the logical storage address(es)) that are part of the group that is collectively protected the parity data. The recovery-enabling data that is to be stored within the temporary backup storage space and/or within the permanent backup storage space may be based on the parity data calculated by the storage system controller **40** and may possibly also include a reference to each physical storage location (or logical storage address) in the group.

According to some embodiments, a write command to the permanent backup storage space may relate to one recovery-enabling data item or may relate to several recovery-enabling data items that have been aggregated together and for which a single batch command may be issued and communicated to the PB management module **46**.

In some embodiments, the map of the permanent backup storage space **460** may include for one or more physical storage locations **465A-465X** within the permanent backup storage space a reference and/or other details regarding one or more physical storage locations within the temporary backup storage space. It would be appreciated that the allocation of a physical storage location within the temporary backup storage space for substantially temporarily storing a certain data element is temporary and the permanent backup storage space may be updated with any change in the allocation of physical storage location(s) within the temporary backup storage space.

As was mentioned above, in accordance with some embodiments, recovery-enabling data is substantially temporarily stored within the temporary storage space, and in further embodiments, storage of a copy of a recovery-enabling data element within the permanent backup storage space may cause the temporary backup storage space resources used for temporarily storing the respective recovery-enabling data to be released.

According to some embodiments, the PB management module **46** may be responsive to the storage of a copy of the recovery data within the permanent backup storage space, for communicating an indication to the TB management module **44** that the recovery enabling data was stored within the permanent backup storage space, and that the physical storage location(s) within the temporary backup storage space which has been allocated for temporarily storing the corresponding recovery enabling data item can be released. The indication may be an acknowledgment of the storage of the recovery-enabling data within the permanent backup storage space.

Once the physical storage location(s) within the temporary backup storage space is released, it becomes available for being used for storing new recovery-enabling data, and the TB management module **44** can overwrite the recovery enabling data temporarily stored therein.

The indication to the TB management module **44** that the recovery-enabling data was stored within the permanent backup storage space may reference the logical storage address(es) associated with the recovery-enabling data which has been stored within the permanent backup storage space. However, in other embodiments, the indication may reference the physical storage location(s) within the primary storage space which is associated with the recovery-enabling data within the permanent backup storage space. For example, the indication may reference the physical storage location(s) where the data item with which the recovery enabling data is associated is stored. In still further embodiments, the indication may reference the physical storage location(s) within the temporary backup storage space which is associated with the recovery-enabling data within the permanent backup storage space.

Having described some embodiments of the invention which relate to the management of the various storage spaces, there is provided below a description according to embodiments of the invention which relates to the recovery of lost or corrupted data within the storage system.

According to some embodiments, when a data element that is part of the current data-set of the storage system **100** is lost or corrupted, a recovery process may be initiated.

The storage system **100** may include a recovery controller **70** which is adapted to monitor data integrity within the storage system **100** and to initiate and control data recovery operations in response to detecting that the integrity of a certain data element or elements is compromised including in cases of loss of data.

In some embodiments, the recovery controller **70** possibly in cooperation with the PS management module **41** and/or other components of the storage system **100** may monitor the integrity of each physical storage location that is used for storing data within the primary storage space of the storage system **100**. When the recovery controller **70** detects that one or more of the physical storage locations has failed or is about to fail, the recovery controller **70** may initiate a predefined recovery procedure.

As part of the recovery procedure, the recovery controller **70** is adapted to determine the location of the recovery-enabling data which corresponds to the lost or corrupted data.

The recovery controller **70** may obtain a reference to the data which has been lost or which has become corrupted. In some embodiments, the PS management module **41,** possibly together with the map of the primary storage space **410,** may determine with which physical storage location(s) the lost or corrupted data was/is associated and may provide a reference thereto to the recovery controller **70.**

In other embodiments, the PS management module **41** determines the logical storage address(es) with which the lost or corrupted data was/is associated and may provide a reference thereto to the recovery controller **70**.

In the description below it is assumed, by way of non-limiting example, that the reference provided to the recovery controller **70** indicates the physical storage location(s) within the primary storage space which are associated with the lost or corrupted data element. Those versed in the art would appreciate that the proposed recovery process can be implemented in a similar manner using a logical storage address(es) as the reference.

According to some embodiments, the recovery controller **70** monitors data integrity at the data element level, and in respect of each data element that is stored within the mass storage system **100**, the recovery controller **70** monitors the physical storage locations that are used for retaining the respective data element within the primary storage of the storage system **100**. When the recovery controller **70** detects that a physical storage location that is associated with a certain data element has failed or is about to fail, the recovery controller **70** may initiate the recovery procedure at least with respect to the lost/corrupted data element.

In some embodiments, the recovery procedure may be operative for rewriting the entire data element. In further embodiments, the recovery controller **70** may be adapted to determine which portion of the data element was corrupted and may configure the recovery procedure the restore only the portion of the data element which is corrupted.

Further by way of example, the recovery controller **70** may be adapted to detect that a VS module associated with the primary storage space (e.g., **10N**) has failed (or is failing), for instance, when the recovery controller **70** detects that the VS module is not responding, or when the VS module is issuing error messages which indicate that it is failing. In response to detecting the failure of the VS module, the recovery controller **70**, may be adapted to initiate a recovery process.

In some embodiments, in response to detecting that one or more of the physical storage locations is failed or is about to fail, a recovery procedure may be initiated with respect to the failing or failed physical storage location. In some embodiments, as part of the recovery procedure, the recovery controller **70** may attempt to rewrite the recovered data into the failed physical storage location.

In further embodiments, as part of the recovery procedure, the recovery controller **70** may be configured to select an alternative physical storage location(s) for storing the recovered data. Once the alternative physical storage location(s) is selected, or possibly after the data is successfully stored within the alternative location, the recovery controller **70** may initiate a mapping update routine for replacing any reference to the failed physical storage location in any of the storage maps used within the mass storage system **100** with a reference to the selected alternative physical storage location(s). For example, each of: the map of the primary storage space **410**, the map of the temporary backup storage space **440** and the map of the permanent storage space **460** may be updated to reflect the mapping update.

Those versed in the art would appreciate that in a similar manner a VS module which has completely failed in its entirety can be recovered using corresponding alterative physical storage locations, and possibly an entire alternative VS module. The maps used within the mass storage system **100** may be updated accordingly.

As was mentioned above, at various instances the recovery-enabling data for a certain data element that is stored within the storage system **100** may be stored at different locations. For example, the recovery-enabling data that is associated with a certain data element may be initially stored within the temporary backup storage space, and later corresponding recovery-enabling data may be copied to the permanent backup storage space. Furthermore, recovery-enabling data which was stored within the temporary backup storage space may be deleted or recycled and may be replaced with subsequent recover-enabling data.

According to some embodiments, when data that was stored within the primary storage space is lost or corrupted, the recovery controller **70** is adapted to initially request the corresponding recovery-enabling data from the temporary backup storage space through the TB management module **44,** and only if according to the TB management module **44** the recovery enabling data element is not stored within the temporary backup storage space, the recovery controller **70** requests the recovery enabling data from the PB management module **46**.

In further embodiments the recovery controller **70** holds an updated copy of the temporary backup storage space map **440** and/or a map of the permanent backup storage space **460** and may be adapted to independently locate the storage location of recovery-enabling data based on the physical storage location (or the logical storage address) associated with the lost or corrupted data.

In still further embodiments, the recovery controller **70** is only capable of determining which one of the temporary backup VS modules is associated with the failed primary storage VS module. Upon request from the recovery controller **70** referencing the physical storage location(s) within the primary storage space of the lost or corrupted data, a device management module of the selected temporary backup VS module (that is - a local management module of the backup VS module) may determine the corresponding physical storage location(s) of the respective recovery-enabling data within the temporary backup storage space of the corresponding recovery enabling data.

In further embodiments, in respect of each data element stored within the primary storage space, the recovery controller **70,** either directly or in cooperation with the storage system controller **40,** may receive an indication whenever respective recovery-enabling data is successfully stored within the temporary storage space. Further in respect of each data element stored within the primary storage space, the recovery controller **70** may receive an indication whenever respective recovery-enabling data is successfully stored within the permanent storage space. The recovery controller **70** may hold a dynamically updating data structure which indicates whether the recovery-enabling data for certain data element is stored within the permanent backup storage space or if the respective recover-enabling data is currently only stored within the temporary backup storage space. This data structure is referred to herein as the "recovery-enabling-data location table".

In yet further embodiments the recovery-enabling-data location table may also include for each data element stored within the system **100** or for each physical storage location allocated by the storage system **100** the specific physical storage locations where the respective recovery-enabling-data is stored within the permanent backup storage space and/or within the temporary backup storage space. The table may be updated dynamically to reflect the current location of the recovery-enabling data

In still further embodiments, in addition or an alternative to using the table to locate the location of recovery-enabling-date within the temporary backup storage space or within the permanent backup storage space, the recovery controller **70** may utilize a recovery-data location function. The recovery-data location function may be adapted to provide for a given physical storage address (or for a given logical storage address) within the primary storage space the physical storage location(s) of the corresponding recovery enabling data.

In case a recovery mapping function is used, some form of a dynamic recovery table **72** may be used to indicate at any point in time whether the recovery-enabling data for a certain data element is found in the temporary storage space, in the permanent backup storage space or in both, and the recovery mapping function may be adapted to provide for a given data element the storage location of the respective recovery-enabling data in the temporary backup storage space, in the permanent backup storage space or in both.

According to some embodiments, for a certain data element that is stored within the primary storage space, a reference to the respective recovery-enabling data within the temporary backup storage space may be removed from the dynamic recovery table **72** when corresponding recovery-enabling data is successfully stored within the permanent backup storage space. In further embodiments, the reference to the respective recovery-enabling data within the temporary backup storage space may be removed from the dynamic recovery table **72** only when in response to successfully storing the corresponding recovery-enabling data within the permanent backup storage space the temporary backup storage space resources that were allocated for storing the corresponding recover-enabling data are released. In still further embodiments, the reference to the respective recovery-enabling data within the temporary backup storage space may be removed from the dynamic recovery table **72** only when the temporary backup storage space resources that were allocated for storing the recover-enabling data are recycled and are now used for storing subsequent recovery-enabling data.

In still a further embodiment, the recovery-enabling-data location table **72** may relate to logical storage addresses and may indicate per each logical storage address that is associated with data which is currently stored in the system **100** the location of the corresponding recovery enabling data.

Whenever the recovery controller **70** receives an indication that a certain data element is lost or corrupted, the recovery controller **70** may establish, based on the recovery-enabling-data location table, whether the recovery enabling data should be retrieved from the temporary backup storage space or from the permanent backup storage space.

As was mentioned above, the map of the temporary backup storage space **440** may map each (one or a group) of the physical storage locations **445A-445K** in the temporary backup storage space to one or more (a single or a group) corresponding physical storage locations **415A-415T** within the primary storage space. The TB management module **44** may be responsive to a request from the recovery controller **70** for retrieving from within the temporary backup storage space the recovery-enabling data stored at the physical storage location(s) corresponding to the physical storage location(s) reference by the recovery controller **70** (which are associated with the lost or corrupted recovery enabling data).

In some embodiments, in case the recovery controller **70** receives an indication, for example from the TB management module **44**, that the physical storage locations referenced in the request for recovery data are not found within the temporary storage space, the recovery controller **70** may refer the request to the PB management module **46**.

In case the recovery enabling data retrieved from the temporary backup storage space is an actual copy of the lost or corrupted data in the primary storage space, the recovery controller **70** possibly in cooperation with the PS management module **41**, rewrites the data retrieved from the backup resources back into the physical storage location(s) associated with the lost or corrupted data.

However, in some embodiments, the recovery-enabling data is not and does not include a copy of the respective data element (or some portion thereof), and in order to recover the lost or corrupted data using the respective recovery-enabling data element(s) a certain processing procedure is required. For example, as mentioned above, the recovery-enabling data may include parity data and references to a plurality (two or more) of data elements that the parity data is based upon and which may be recovered using the parity data.

The references to the data elements associated with a particular parity data may be embedded within the recovery-enabling data and the recovery controller **70** may use the references to retrieve the data elements (excluding the lost or corrupted data element) associated with the parity data in order to restore the lost or corrupted data element associated with the parity data.

In other embodiments, the recovery controller **70** may derive the references to the data elements associated with a particular parity data based on the physical storage location or based on the logical storage address that is/are associated with the lost or corrupted data element. For example, in a case where the recovery-enabling data is parity based (such as RAID-5), the recovery controller may use a reference function which may provide for any given physical storage location or for any given logical storage address a reference to a set of other physical storage locations or to a set of logical storage addresses which are also associated with the respective parity data. In this respect, it would be appreciated that a given data element may be recoverable based on the data element's physical storage location or logical storage address and the corresponding parity data.

Recovering a data element based on corresponding parity data and references to a plurality (two or more) of data elements that the parity data is based upon is known *per se.* A certain one of the data elements associated with the parity data can be determined based on the parity data and each one of the other data elements with which the parity data is associated. It would be appreciated that parity data and a reference to associated data elements is provided here as one example of recovery-enabling data which is not an actual copy of the protected data element, and that other types of recovery-enabling data may be realized by those versed in the art and implemented as part of some embodiments of the mass storage system **100**.

As mentioned above, the temporary backup storage space is used for substantially temporarily storing recovery-enabling data, and within a controlled time-frame from the storage system's **100** response to a write command, recovery-enabling data which corresponds to the data element to which the write command relates is stored within the permanent backup storage space. Storage of the recovery-enabling data within the permanent backup storage space causes the storage resources used for storing the corresponding recovery enabling data in the temporary backup storage space to be released.

Thus, in some cases, when the recovery controller **70** requests a recovery-enabling data item(s) for recovering a certain data element(s) within the primary storage space, the corresponding recovery-enabling data may be absent from the temporary storage space. In such cases, the TB management module **44** may determine that the requested data is absent from the temporary backup storage space, and it may indicate to the recovery controller **70** that the data is not available at the temporary backup storage space. Alternatively, the recovery controller **70** may deduce that the recovery enabling data is absent from the temporary backup storage space in case there is no response from the TB management module **44** in this regard within a predefined period of time.

According to some embodiments, in case the recovery controller **70** determines that the recovery enabling data cannot be obtained from within the temporary storage space, for example based on the recovery-enabling data locationable or following a failed request to the TB management module **44,** the recovery controller **70** may refer the request to the PB management module **46**.

Having described some embodiments which relate to recovery of lost or corrupted data, there is now provided a description of some embodiments of the invention which relate to recovery of recovery-enabling data. The lost or corrupted recovery enabling data may be the data temporarily stored with the temporary backup storage space or the permanently stored recovery enabling data within the permanent backup storage space.

The description provided below relates first to the loss of recovery-enabling data within the temporary storage space followed by a description of further embodiments of the invention which relate to the handling of loss of recovery-enabling data within the permanent storage space.

According to some embodiments, the recovery controller **70** possibly in cooperation with the temporary storage management module **44** and/or other components of the storage system **100** may monitor the integrity of each physical storage location within the temporary backup storage space that is used for temporarily storing recovery enabling data within the storage system **100**. When the recovery controller **70** detects that one or more of the physical storage locations has failed or are about to fail, the recovery controller **70** may initiate a recovery procedure in respect of the designated physical storage locations.

As part of the recovery procedure, based on a reference to the physical storage locations associated with the lost or corrupted recovery enabling data, the recovery controller **70** may determine the physical storage location(s) within the primary storage that are associated with the data element(s) with which the recovery enabling data is associated. For example, the recovery controller **70** may use the map of the temporary storage space which maps each one of the physical storage locations available to the temporary backup storage space to one or more corresponding physical storage locations within the primary storage space. As mentioned above, other mapping schemes may be used as part of some embodiments of the invention, and the operation of the recovery controller **70** may be adapted accordingly.

In a similar manner, the recovery controller **70** may initiate a recovery procedure for an entire VS module that is associated with the temporary backup storage and which has malfunctioned, resulting in the loss or corruption of the recovery-enabling data stored thereon.

In some embodiments, the recovery procedure may be intended to rewrite the entire lost recovery-enabling data. In further embodiments, the recovery controller 70 may be adapted to determine which portion of the recovery-enabling data was lost or corrupted and may configure the recovery procedure the restore only the lost or corrupted portion of the data.

In case the lost or corrupted data is (or is part of) an actual copy of some corresponding data in the primary storage space (e.g., a corresponding data element), based on reference to the physical storage location within the primary storage space which is used to store the data which corresponds to the lost or corrupted data, the lost or corrupted data may be recovered by the recovery controller **70.** For example, the storage controller **70** may retrieve the data at the physical storage location within the primary storage space where the data which corresponds to the lost or corrupted data is stored and may write the retrieved data into the temporary storage space.

However, in further embodiments, generation of the recovery-enabling data may involve processing of one or more data elements in the primary storage space. The recovery controller **70** may be adapted to initiate the processing of the data element(s) associated with a certain lost or corrupted recovery-enabling data so as to recover the recovery-enabling data.

In some embodiments, the recovery controller **70** may be adapted to retrieve from the primary storage space each one of the data elements with which the lost or corrupted recovery-enabling data is/was associated, and may process the data elements to generate the corresponding recovery-enabling data. For example the recovery controller **70** may be adapted to compute parity data based on the data elements with which the lost or corrupted recovery-enabling data is/was associated and the parity data may be stored within the temporary backup storage space.

Examples of certain types of recovery-enabling data were provided above and it would be apparent to those of ordinary skill in the art how to regenerate such types of recovery-enabling data given the one or more data elements associated with the recovery-enabling data.

Once the recovery-enabling data is regenerated, the recovery controller **70,** possibly in cooperation with other components of the storage system **100,** such as the TB management module **44** and the map of the temporary backup storage space, may determine an appropriate physical storage location(s) within the temporary storage space for the regenerated recovery-enabling data. According to some embodiments, as part of the recovery procedure, the deferral policy is updated with respect to the recovered data. In one example, the deferral policy with respect to the recovered data is reset and the recovered data is regarded as if it has just been written into the temporary backup storage space. In another example, the deferral policy parameters state for the lost or corrupted data is applied to the recovered data, and the deferral of the destaging of the recovered data is determined according to the parameters and according to the state of the lost or corrupted data before being recovered.

Moving now to the description of embodiments of the invention which relate to recovery of lost or corrupted data within the permanent backup storage space.

According to some embodiments, the recovery controller **70** possibly in cooperation with the permanent backup management module **46** and/or other components of the storage system **100** may monitor the integrity of each physical storage location within the permanent backup storage space that is used for permanently storing recovery enabling data within the storage system **100**. When the recovery controller **70** detects that one or more of the physical storage locations have failed or are about to fail, the recovery controller **70** may initiate a recovery procedure in respect of the designated physical storage locations.

As part of the recovery procedure, based on a reference to the physical storage locations or logical storage addresses associated with the lost or corrupted recovery-enabling data, the recovery controller **70** may determine the physical storage location(s) within the primary storage space that are associated with the data element(s) with which the recovery enabling data is associated. For example, the recovery controller **70** may use the map of the permanent backup storage space which maps each one of the physical storage locations available to the permanent backup storage space to one or more corresponding physical storage locations within the primary storage space. As mentioned above, other mapping schemes may be used as part of some embodiments of the invention, and the operation of the recovery controller **70** may be adapted accordingly.

In a similar manner, the recovery controller **70** may initiate a recovery procedure for an entire NVS module that is associated with the permanent backup storage space and which has malfunctioned resulting in the loss or corruption of the recovery-enabling data stored thereon.

As was described above with reference the recovery of recovery enabling data within the temporary storage space, the recovery controller 70 may be adapted to recover a complete recovery-enabling data item, or in further embodiments, the recovery controller **70** may be adapted to recover a specific portion of the recovery-enabling data.

The regeneration of the recovery enabling data for the permanent backup storage space is similar to the recovery process described above with reference to recovery of recovery-enabling data within the temporary backup storage space.

Once the recovery-enabling data is regenerated, the recovery controller **70,** possibly in cooperation with other components of the storage system **100,** such as the PB management module **46** and the map of the permanent backup storage space, may determine an appropriate physical storage location(s) within the permanent storage space for the regenerated recovery-enabling data. The recovered data may be stored within the permanent storage space. Possibly the recovered data may be stored at the same location where the lost or corrupted was stored.

According to some embodiments, as part of a recovery procedure in respect of recovery-enabling data within the permanent storage space, instead of writing the recovered data within the permanent storage space, the recovery controller **70** may cause the recovered data to be stored within the temporary storage space, and concurrently initiate a write command for writing the recovered data into the permanent storage space. The initiated write request may be handled by the permanent backup policy mentioned above as if the recovery enabling data within the temporary storage space in a manner which is similar to the handling of an incoming write command, including the implementation of the destaging deferral policy. The handling of write command to the permanent storage space was described above in detail in this context.

Throughout the description of some embodiments of the present invention reference is made to a mass storage system which includes VS modules/devices and NVS modules/devices, where a first group of VS modules/devices is used as primary storage for holding the entire data set of the system, a second group of VS modules/devices is used as a temporary backup and the NVS modules/devices are used as permanent backup. It would be appreciated that VS modules/devices, such as various RAM devices, for example, and NVS modules/devices, such as hard drives or Flash devices, have different characteristics. For example RAM device (a type of VS module) and hard drives (a type of NVS module) have different physical properties, such as I/O performance, lifespan, power consumption, physical size, data loss or corruption rate etc. Other significant differences include the cost of the storage device.

The inventors of the present invention contemplate in further embodiments of the invention using other types of storage devices implemented with the storage management algorithm described above, and possibly in combination with the controllers and management modules described above.

The storage devices underlying the primary storage space are characterized by a relatively high cost per storage unit (for example, USD per Terabyte), a moderately high cost per IOPS (Input/Output Operations Per Second) and relatively high performance (IOPS).

The storage devices underlying the temporary storage space are characterized by a relatively high cost per storage unit (for example, USD per Terabyte), a moderately high cost per IOPS (Input/Output Operations Per Second), relatively high performance (IOPS). The storage devices underlying the temporary storage space may be of the same type as the storage device underlying the temporary storage or a different type of storage devices may be used which have similar characteristics.

The storage devices underlying the permanent backup storage space are characterized by a relatively low cost per storage unit (for example, USD per Terabyte), a moderately low cost per IOPS (Input/Output Operations Per Second), and relatively low performance (IOPS). In one embodiment, the storage devices underlying the permanent backup storage space may be of the same type as the storage devices underlying the temporary storage space and/or of the same type as the storage devices underlying the primary storage space but may posses different characteristics as detailed hereinabove.

According to a further aspect of the present invention, there is provided a heterogeneous storage system and a method of management thereof, including: a primary storage space allocated over a plurality of physical storage locations provided by a plurality of storage devices that are characterized by relatively high performance capabilities and a relatively high-cost per storage-segment; a temporary backup storage space allocated over a plurality of physical storage locations provided by a plurality of storage de vices whose performance and cost characteristics are similar to the respective characteristics of the storage devices associated with the primary storage space, and the storage capacity of the temporary backup storage space is substantially smaller than the storage capacity of the primary storage space; a permanent backup storage space allocated over a plurality of physical storage locations provided by a plurality of storage devices that are characterized by relatively low performance capabilities and a relatively low-cost per storage-segment, and the storage capacity of the permanent backup storage space is substantially equal to or is greater than the storage capacity of the primary storage space; and a storage controller responsive to an incoming write request relating to a certain data element for causing the data element to be written into said primary storage space and into said temporary backup storage space substantially immediately upon receipt of the request, and once stored within said primary and temporary backup storage spaces, the storage controller acknowledges the write request, and wherein the storage controller is configured to defer a permanent backup of the data element within the permanent backup storage space until a predefined permanent backup criterion is met.

In some embodiments, the storage controller is responsive to an indication that the recovery-enabling-data was successfully destaged to the permanent backup storage space for releasing the temporary backup storage resources that were used for storing the corresponding recovery-enabling-data. Once released, the storage resources of the temporary backup storage space can be used for storing other data, such as recovery-enabling-data corresponding to a data element that is associated with a more recent write command.

In the description of the present invention, reference was made in particular to the handling of incoming write commands and to the implementation of a recovery procedure. It would be apparent to anyone with ordinary skill in the art that the proposed storage system and the proposed storage system management method may be utilized for servicing other types of storage activity.

For example, in response to receiving a read command at the storage system **100,** for example from a host **50,** the storage system controller **40,** through the PS management module **41,** may retrieve the data located at the physical storage location(s) associated with the logical storage address(es) referenced by or associated with the read command. The storage system controller **40** may communicate the data read from the physical storage locations associated with the read command to the destination of the read command, typically to the host **50** from which the read command was received. In some embodiments, in response to a read command data is always fetched from the primary storage space, and in case the requested data is missing a recovery procedure is initiated for recovering the data into the primary storage. If the recovery procedure is unsuccessful a failure notice is communicated to the node associated with command.

Referring back to **FIG. 1** there is now provided a description which is related to the use of Uninterruptible Power Supply (UPS) units as part of some embodiments of the storage system and the method of operating thereof. According to some embodiments, the storage system **100** may include one or more UPS units **90A-90R**. Each UPS unit may be adapted to enable uninterruptible power to various components of the storage system **100** or at least to some of which. The plurality of UPS units **90A-90R** may be arranged as a redundant set (or sets) so that loss or failure of one or more UPS units will not cause critical degradation of the power supply provided by the set of UPS units **90A-90R**. The UPS may be designated for specific components of the storage system **100** or a pool of UPS power may be created and allocated where it is needed.

According to some embodiments, whenever the main power supply **95** is interrupted (including failure of the power grid), the storage system **100** may detect or may receive an indication that power supply is compromised. For example, one or more of the UPS units **90A-90R** may be adapted to monitor the state of the power supply and may be configured to detect power interruption and may respond to certain power interruption conditions by alerting the storage system controller **40**, for example. When a power interruption condition is detected in the storage system **100,** the UPS units **90A-90R** may be configured to sustain normal power supply to the storage system **100** or at least to certain components of the storage system **100** during at least a certain period of time. The storage controller **40** is configured to use the backup power to ensured that the entire data-set stored within the system is protected and no data will be lost even if the power failure is sever and lengthy, as will be described in further detail below.

According to some embodiments, when power interruption or power failure which may jeopardize the data on the VS modules is detected and during a certain period the storage system is running on backup power provided by the UPS units **90A-90R,** normal operation may be resumed in the storage system **100** for a predefined period of time. In case the power interruption extends beyond this period of time, the storage system **100** may switch to a data protection mode. In other embodiments, data protection mode may be activated immediately upon detection of power interruption.

By way of example, the operation modes of the storage system **100** may be controlled by the storage system controller **40.**

According to some embodiments, during the data protection mode, all I/O operations within the system 100 are suspended and hosts cannot interact with the system **100.**

In addition to the suspension of I/O operations within the system **100,** switching to the data protection mode may cause an urgent destaging process to be initiated. In some embodiments, the urgent destaging process may involve storage of recovery-enabling data for the entire data-set of the storage system **100** and storage of any other critical data within the storage system **100** on NVS media, i.e., within the permanent backup storage space. It would be appreciated that the destaging process may be an ongoing process and therefore, according to some embodiments, the urgent destaging process may include destaging of any recovery-enabling data which was not yet destaged, for example during normal operation of the storage system **100**. The destaging of data into the permanent backup storage space may receive high priority during the data protection mode. According to one embodiment, the destaging of to the permanent backup storage space may receive top priority during the data protection mode.

According to some embodiments of the invention, the urgent destaging process may involve one or more of the following types of data: user data, recovery-enabling data (including copies of data elements), metadata, configurations data and other data which may be required in order to maintain integrity and completeness of the current data-set of the storage system **100** and data which may be required to sustain operability and/or functionality of the storage system **100**. According to some embodiments, a further condition of applying the urgent destaging process to any piece of data may be that the data is not already stored within the permanent backup storage space. Once all the critical data has been copied to permanent backup storage space (e.g., to the NVS modules of the storage system), the storage system controller **40** may invoke a shut-down of the storage system **100.** However, the system **100** may be otherwise disabled until manually or automatically switched back to the normal operation mode.

The trigger for switching back to normal operation mode may be the return of normal power supply. In case an automatic resume process is implemented, the operation of the system may be resumed when a certain resume criterion is met, for example, when the UPS detects that stable (or otherwise appropriate) power supply returns.

When the storage system is turned back on following a data protection mode, the system **100** may be switched to a data recovery mode. As part of the data recovery mode the data which was stored within the permanent backup storage space may be reloaded to the primary storage space, as needed. Recovery of lost data was described above and similar methodology may be implemented for recovering large chunks of the storage system's **100** data-set or indeed the entire data-set in case it is deleted from the primary storage space, for example, as result of power interruption. Any further operational data which may be required for resuming operation of the storage system **100** or any of its components, and in particular critical components, may also be recovered, as necessary.

The system's **100** operability and functionality may be restored using the data from the permanent backup storage space, and the data-set of the storage system **100** may return to its state previous to the power interruption or prior to the switch to the data protection mode. It would be apparent to those of ordinary skill in the art, that given appropriate backup data, it may be possible to successfully reconstruct and reconfigure the functional components of a computerized system following some disruption to the normal operation of the system and possibly also recovering from loss of certain operational and configuration data.

It would be appreciated, that in order to achieve graceful shut-down and avoid loss of data, the system's UPS units **90A-90R** should be charged with enough power to be capable of sustaining power to the system **100** until the entire (current) data-set of the storage system **100** is protected; or as an alternative, the size of the temporary storage space, or the amount (or some destaging UPS-time footprint) of pending write requests to the permanent backup storage space maybe restricted according to the current capacity of the system's UPS units **90A-90R.**

It would be appreciated, that outside the proposed storage system, when volatile media is used for storing data, at any time the data on the volatile media may be in jeopardy of being lost due to power interruption. A controlled portion of the data-set within the proposed storage system may also be sensitive to loss of sustained power, since the destaging of recovery-enabling data to permanent backup storage space may be deferred. Other data which held on the VS modules **10A-10N** or **11A-11S** and not backed up on the NVS modules **30A-30M** may also be at risk of being lost. Such data may include information that is required to sustain operation of the storage system **100** and/or information that is required to enable recovery of the storage system **100** to its state pervious the switch data protection mode. According to some embodiments, such functional data may be stored in a designated location(s) within the array of VS modules **10A-10N.** According to one embodiment, by way of example, the functional data is distributed according to a predefined scheme across the array of VS modules **10A-10N** or across some subset of the array of VS modules **10A-10N.** According to some embodiments, the functional data may include, but is not limited to functional metadata such as storage maps (**41**, **61**) recovery tables (**72**) and so on.

According to some embodiments, the capacity that the UPS units **90A-90R** is based on the maximum amount of data to be destaged, which dictates how long it would take to copy the data to the NVS modules **30A-30M**, and based on an estimation of the power consumption rate of the relevant storage system's components for a stream of destaging operations. Those of ordinary skill in the art would be readily able to calculate the required capacity of the UPS units **90A-90R** based on the foregoing.

As an alternative and according to further embodiments, the capacity that the UPS units **90A-90R** is given, and together with the estimation regarding the amount of power required to enable destaging of a certain amount of data, the maximum amount of pending write commands to the permanent backup storage space is determined. In still further embodiments, the size of the temporary backup storage space is determined in a similar manner.

It would be appreciated, that according to some non-limiting embodiments, the recovery-enabling data that is stored within the permanent backup storage space during normal operation may not be sufficient for enabling full recovery of the data-set of the storage system. For example, the recovery-enabling data within the permanent backup storage space may include parity bits and references to each data element that is associated with the parity bits. When a certain data element is lost it may be possible to recover the data element using the parity bits and the reference to the other data elements associated with the parity bits. The other data elements can be accessed using the references which are part of the recovery-enabling data within the permanent backup storage space. However, it would be appreciated that in accordance with some embodiments, if a significant portion (including all) of the data within primary storage space is lost, for example, due to a severe power interruption, recovery-enabling data which is based on parity bits and references to the data elements associated with the parity bits may not be sufficient, in and of itself, to enable recovery of the lost data. This is because the references are not sufficient for recovering the lost data and at least some of the actual data to which the references relate is necessary to recover one or more of the other data elements associated with the parity bits.

Thus, in accordance with some embodiments, the urgent destaging process that is implemented when the system **100** switches to the data protection mode may involve additional data write activity from the VS modules **10A-10N** to the NVS modules **30A-30M** in order to avoid any data loss in the system **100** and sustain the data in the system **100** or enable recovery of the data in the system **100**. According to some embodiments, as part of the urgent destaging process, at least some of the data elements within the primary storage space (which are part of the current data-set of the storage system) may be copied to the permanent backup storage space and may thus be stored on non-volatile media. According to further embodiments, as part of the urgent destaging process, the entire current data-set of the storage **100** may be copied from the primary storage space to the permanent backup storage space.

According to some embodiments, during normal operation of the storage system **100**, certain data elements may be copied from the primary storage space to the permanent backup storage space. The data elements copied to the to the permanent backup storage space may replace respective recovery-enabling data that is already stored within the permanent backup storage space, or in further embodiments, both the data elements and the respective recovery-enabling data may be retained within the permanent backup storage space, for example, on different NVS modules.

The copying of data elements to the permanent backup storage space may be responsive to a certain event or system state or may be carried routinely every predetermined time-period. As was mentioned above, the values of certain data elements may be required to enable recovery of this or other data elements, possibly in combination with respective recovery-enabling data, for example, in case parity bits are used.

In still further embodiments of the invention, if some of the elements which are part of the current data-set of the storage system **100** are already stored within the permanent backup storage space, the urgent destaging process may include copying (only) from the primary storage space to the permanent backup storage space the data elements which are not already stored (or are missing) from the NVS modules **30A-30M,** and thus creating a complete copy of the entire (current) data-set of the storage system **100** within the NVS storage space.

It would be appreciated that in case that the urgent destaging process includes copying of at least some of the data elements from the primary storage space to the permanent backup storage space, the actual or estimated amount of data elements that need to be backed up by the storage system may also be taken into account when determining the amount of backup power (or backup time) that the UPS units **90A-90R** are required to provide.

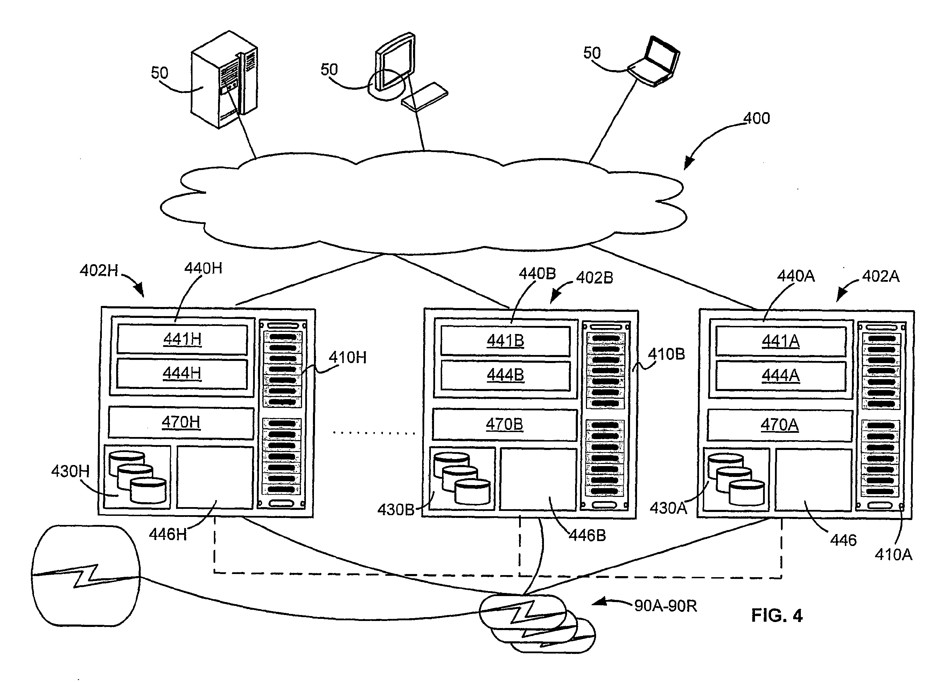

Reference is now made to **FIG. 4** which is a block diagram illustration of a further configuration of a mass storage system according to some embodiments of the present invention. In **FIG. 4** the primary storage space and the temporary backup storage space are implemented over a single array of VS devices **410A-410H** which are installed on an array of blade servers **402A-402H**. The physical storage resources provided by the VS devices **410A-410H** are virtually divided at least among the primary storage space and the temporary backup storage space, both of which were described above. In some embodiments, some (and possibly each) of the VS devices **410A-410H** may be exclusively allocated to the primary storage space or to the permanent backup storage space.

Also provided by the array of blade servers **402A-402H** is an array of NVS devices **30A-30H.** The physical storage resources provided by the NVS devices **30A-30H** (some or all of which) are allocated to the permanent backup storage space, as was described in detail above. It should be appreciated, that in some embodiments not all blade servers **402A-402H** have NVS devices installed thereon or some blade server may have only NVS devices **30A-30H** together with some management components.

In some embodiments, the storage system controller **440A-440H** may also be distributed across the plurality of blade servers **402A-402H**. Distributed control modules are known *per se.* The management modules **441A-441H, 444A-444H, 446A-446H** and **470A-470H**, which may be implemented as part of the system controller **440A-440H** or as separate components may also be distributed across the plurality of blade servers **402A-402H**.

## Claims

1. A storage system, comprising:
a primary storage space associated with a first plurality of volatile storage ("**VS**") devices (10A-10N) and used for substantially persistently storing the entire data-set of the storage system (100);
a temporary backup storage space associated with a second plurality of VS devices (11A-11S);
a permanent backup storage space associated with a third plurality of non-volatile storage ("**NVS**") devices (30A-30N);
a storage controller (40) configured to operate at a normal mode during which the controller is configured to cause said first plurality of VS devices (10A-10N) to substantially persistently store the entire data set of the storage system (100) in said primary storage space and for implementing a a provisional redundant storage sequence in response to a write request related to a data element, including:
- storing the data-element within the primary storage space and substantially immediately or concurrently storing recovery-enabling-data corresponding to the data-element within the temporary backup storage space, and
- acknowledging the write request substantially immediately following completion of the storage within the primary storage space and within the temporary backup storage space,
and asynchronously with the provisional redundant storage sequence, the controller is adapted to destage the recovery-enabling data to the permanent backup storage space according to a predefined permanent backup deferral policy setting a controlled timeframe for deferring the destaging of the recovery-enabling data relative to the respective provisional redundant storage sequence; and
one or more uninterrupted power supply (**UPS**) units configured to provide backup power in case of power interruption to enable completion of destaging of recovery-enabling data for the entire data-set of the storage system (100);
wherein the deferral policy is associated with a capacity of the UPS units and is configured so that in case of power interruption, the backup power available from the UPS units is sufficient to enable destaging of all pending write commands to the permanent backup storage space and for completing storage of corresponding backup data within the permanent backup storage space.

2. The system according to claim **1,** wherein the controller is responsive to an indication that the recovery-enabling-data was successfully destaged to the permanent backup storage space for releasing the temporary backup storage space storage resources that were used for storing the corresponding recovery-enabling-data.

3. The system according to claim **1,** wherein the storage capacity of the temporary backup storage space is substantially smaller than the storage capacity of the primary storage space, and the storage capacity of the permanent backup storage space is substantially equal to or greater than the storage capacity of the primary storage space.

4. The system according to claim **1,** wherein the storage controller (40) is adapted to operate according to the predefined permanent backup deferral policy during a normal operation mode, and wherein the storage controller (40) is responsive to a power interruption for switching to a data protection mode during which the controller is adapted to destage, using backup power, any recovery-enabling data which was not yet destaged to the permanent backup storage space during the normal operation mode.

5. The system according to claim **4,** wherein during normal operation of the storage system (100), a relatively small portion of the data within the primary storage space is protected by data within the temporary backup storage space, and the permanent backup storage space protects at least the remaining data which is not protected by the data within the temporary backup storage space.

6. The system according to claim **4,** once appropriate power is resumed, the storage controller (40) is adapted to recover from the permanent storage space and into the primary storage space any data which was lost from the primary storage space before resuming service for I/O requests from entities outside the storage system (100).

7. The system according to claim **1,** wherein the size of the temporary backup storage space is such that the available backup power is sufficient to enable destaging of the entire recovery-enabling data within the temporary backup storage space and to complete storage of the respective backup data within the permanent backup storage space.

8. The system according to claim 7, wherein the deferral policy is associated with the size of the temporary backup storage space and is configured so that destaging of recovery-enabling data to the permanent backup storage space is promoted when the availability of storage resources within the temporary backup storage space falls below a predefined level.

9. The system according to claim **1,** wherein the deferral policy is configured so that priority is given to destages of multiple recovery-enabling data that together form a chunk of recovery-enabling data which corresponds to sequential physical storage locations within the permanent backup storage space over other pending destages.

10. The system according to claim **1,** wherein the deferral policy is associated with services or processes which compete for common storage system resources with the destaging process and the deferral policy is configured to implement an optimization scheme for optimizing allocation of the system's resources allocation to the destaging process and to the services or processes which compete for common storage system resources with the destaging process.

11. The system according to claim 10, wherein the optimization scheme is associated with any one or more of the following: current, past, projected or assumed performance of the system or any of its components, current, past, projected or assumed capacity of the system or any of its components, current, past, projected or assumed priority of a process or services running or pending in the system and current, past, projected or assumed redundancy of the system or of any of its components.

12. A method of managing a storage system, comprising:
receiving a request to write a data-element into the storage system (100);
in response to the write request implementing a provisional redundant storage sequence including:
- storing a data-element in a primary storage space that is used for substantially persistently storing the entire data-set of the storage system (100), the primary storage space is associated with a first array of VS devices , and substantially immediately or concurrently storing recovery-enabling-data corresponding to the data-element within a temporary backup storage space of the storage system (100) and associated with a second array of VS devices, and
- acknowledging the write request substantially immediately following completion of the storage within the primary storage space and within the temporary backup storage space;
providing backup power by one or more uninterrupted power supply (UPS) units to enable completion of destaging of recovery-enabling data for the entire data-set of the storage system in case of power interruption; and
asynchronously with the provisional redundant storage sequence, destaging the recovery-enabling data to an array of NVS devices associated with a permanent backup storage space of the storage system (100), wherein said destaging is carried out according to a predefined permanent backup deferral policy setting a controlled timeframe for deferring the destaging of the recovery-enabling data relative to the respective provisional redundant storage sequence;
wherein the deferral policy is associated with a capacity of the UPS units and is configured so that in case of power interruption, the backup power available from the UPS units is sufficient to enable destaging of all pending write commands to the permanent backup storage space and for completing storage of corresponding backup data within the permanent backup storage space.

13. The method according to claim 12, further comprising releasing the temporary backup storage space storage resources that were used for storing the recovery-enabling-data in response to an indication that the recovery-enabling-data was successfully destaged to the permanent backup storage space.

14. The method according to claim 12, wherein the predefined permanent backup deferral policy is implemented in the storage system (100) during a normal operation mode, and further comprising switching the storage system (100) to a data protection mode in response to a power interruption, and wherein during the data protection mode destaging, using backup power, any recovery-enabling data which was not yet destaged to the permanent backup storage space during the normal operation mode.

## Patentansprüche

1. Speichersystem, das Folgendes umfasst:
einen ersten Speicherraum, der mit einer ersten Vielzahl von flüchtigen Speicher ("VS")-Vorrichtungen (10A - 10N) assoziiert ist und verwendet wird, um im Wesentlichen dauerhaft den gesamten Datensatz des Speichersystems (100) zu speichern;
einen temporären Sicherheits-Speicherraum, der mit einer zweiten Vielzahl von VS-Vorrichtungen (11A - 11S) assoziiert ist;
einen permanenten Sicherheits-Speicherraum, der mit einer dritten Vielzahl von nicht-flüchtigen Speicher ("NVS")-Vorrichtungen (30A - 30N) assoziiert ist,
eine Speichersteuerung (40), die konfiguriert ist, um in einem normalen Modus zu arbeiten, während dessen die Steuerung konfiguriert ist, um zu gewährleisten, dass die erste Vielzahl von VS-Vorrichtungen (10A - 10N) im Wesentlichen dauerhaft den gesamten Datensatz des Speichersystems (100) in dem primären Speicherraum speichert, und um eine vorläufige redundante Speichersequenz in Antwort auf eine Schreibanfrage zu implementieren, die mit einem Datenelement verbunden ist, die Folgendes umfasst:
- Speichern des Datenelements im primären Speicherraum und im Wesentlichen unmittelbar oder gleichzeitig Speichern von die Wiederherstellung ermöglichenden Daten, die dem Datenelement im temporären Sicherheits-Speicherraum entsprechen, und
- Bestätigen der Schreibanfrage im Wesentlichen unmittelbar nach der Vervollständigung der Speicherung im primären Speicherraum und im temporären Sicherheits-Speicherraum,
und asynchron mit der vorläufigen redundanten Speichersequenz ist die Steuerung ausgelegt, um die die Wiederherstellung ermöglichenden Daten an den permanenten Sicherheits-Speicherraum gemäß einen vorbestimmten permanenten Sicherheits-Verzögerungsgrundsatz auszuspeichern, der einen gesteuerten Zeitrahmen festsetzt, um das Ausspeichern der die Wiederherstellung ermöglichenden Daten mit Bezug auf die entsprechende vorläufige redundante Speichersequenz zu verzögern; und
eine oder mehrere ununterbrochene Stromversorgungs (UPS)-Einheiten, die konfiguriert sind, um für den Fall einer Stromunterbrechung Notstrom bereitzustellen, um die Vervollständigung des Ausspeicherns von die Wiederherstellung ermöglichenden Daten für den gesamten Datensatz des Speichersystems (100) zu ermöglichen;
wobei der Verzögerungsgrundsatz mit einer Fähigkeit der UPS-Einheiten assoziiert und derart konfiguriert ist, dass für den Fall einer Stromunterbrechung der Notstrom, der von den UPS-Einheiten zur Verfügung steht, ausreichend ist, um das Ausspeichern aller ausstehenden Schreibbefehle an den permanenten Sicherheits-Speicherraum zu ermöglichen, und um die Speicherung von entsprechenden Sicherheitsdaten im permanenten Sicherheits-Speicherraum zu vervollständigen.

2. System nach Anspruch 1, wobei die Steuerung auf eine Anzeige antwortet, dass die die Wiederherstellung ermöglichenden Daten erfolgreich in den permanenten Sicherheits-Speicherraum ausgespeichert wurden, um die temporären Speichermittel der Sicherheits-Speicherdaten freizusetzen, die verwendet wurden, um die entsprechenden die Wiederherstellung ermöglichenden Daten zu speichern.

3. System nach Anspruch 1, wobei die Speicherkapazität des temporären Sicherheits-Speicherraums im Wesentlichen kleiner als die Speicherkapazität des primären Speicherraums ist, und die Speicherkapazität des permanenten Sicherheits-Speicherraums im Wesentlichen gleich wie oder größer als die Speicherkapazität des primären Speicherraums ist.

4. System nach Anspruch 1, wobei die Steuervorrichtung (40) ausgelegt ist, um gemäß dem vorbestimmten permanenten Sicherheits-Verzögerungsgrundsatz während eines normalen Betriebsmodus zu arbeiten, und wobei die Speichersteuerung (40) auf eine Stromunterbrechung antwortet, um in einen Datenschutzmodus zu schalten, während der die Steuerung ausgelegt ist, um unter Verwendung von Notstrom jedwede die Wiederherstellung ermöglichenden Daten auszuspeichern, die während des normalen Betriebsmodus noch nicht in den permanenten Sicherheits-Speicherraum ausgespeichert wurden.

5. System nach Anspruch 4, wobei, während des normalen Betriebs des Speichersystems (100), ein verhältnismäßig kleiner Abschnitt der Daten im primären Speicherraum von Daten im temporären Sicherheits-Speicherraums geschützt wird, und der permanente Sicherheits-Speicherraum mindestens die verbleibenden Daten schützt, die nicht von den Daten im temporären Sicherheits-Speicherraum geschützt sind.

6. System nach Anspruch 4, wobei, nachdem ein angemessener Strom wieder hergestellt ist, die Steuervorrichtung (40) ausgelegt ist, vom permanenten Speicherraum und in den primären Speicherraum alle Daten wiederherzustellen, die vom primären Speicherraum verloren gingen, bevor der Dienst für E/A-Anforderungen von Entitäten außerhalb des Speichersystems (100) wieder aufgenommen wird.

7. System nach Anspruch 1, wobei die Größe des temporären Sicherheits-Speicherraums derart ist, dass der verfügbare Notstrom ausreichend ist, um das Ausspeichern der gesamten die Wiederherstellung ermöglichenden Daten im temporären Sicherheits-Speicherraum zu ermöglichen, und um die Speicherung der entsprechenden Sicherheitsdaten im permanenten Sicherheits-Speicherraum zu vervollständigen.

8. System nach Anspruch 7, wobei der Verzögerungsgrundsatz mit der Größe des temporären Sicherheits-Speicherraums assoziiert und derart konfiguriert ist, dass das Ausspeichern der die Wiederherstellung ermöglichenden Daten an den permanenten Sicherheits-Speicherraum gefördert wird, wenn die Verfügbarkeit von Speichermitteln im temporären Speicherraum unter ein vordefiniertes Niveau fällt.

9. System nach Anspruch 1, wobei der Verzögerungsgrundsatz derart konfiguriert ist, dass den Ausspeicherungen von zahlreichen die Wiederherstellung ermöglichenden Daten, die zusammen einen Block von die Wiederherstellung ermöglichenden Daten bilden, der sequenziellen physischen Speicherplätzen im permanenten Sicherheits-Speicherraum entspricht, Priorität gegenüber anderen ausstehenden Ausspeicherungen eingeräumt wird.

10. System nach Anspruch 1, wobei der Verzögerungsgrundsatz mit Diensten oder Prozessen assoziiert ist, die um gemeinsame Speichersystem-Mittel mit dem Ausspeicher-Prozess konkurrieren, und der Verzögerungsgrundsatz konfiguriert ist, um ein Optimierungsschema zu implementieren, um die Zuordnung der Mittel des Systems zum Ausspeicher-Prozess und zu den Diensten oder Prozessen zu optimieren, die um gemeinsame Speichersystem-Mittel mit dem Ausspeicher-Prozess konkurrieren.

11. System nach Anspruch 10, wobei das Optimierungsschema mit einem oder mit mehreren des Folgenden assoziiert ist: gegenwärtige, vergangene, projizierte oder angenommene Leistung des Systems oder einer seiner Komponenten, gegenwärtige, vergangene, projizierte oder angenommene Kapazität des Systems oder einer seiner Komponenten, gegenwärtige, vergangene, projizierte oder angenommene Priorität eines Prozesses oder Dienstes, das/der im System läuft oder ausstehend ist, und gegenwärtige, vergangene, projizierte oder angenommene Redundanz des Systems oder einer seiner Komponenten.

12. Verfahren zur Verwaltung eines Speichersystems, das Folgendes umfasst:
Empfangen einer Anfrage, ein Datenelement in das Speichersystem (100) zu schreiben;
in Antwort auf die Schreibanfrage, Implementieren einer vorläufigen redundanten Speichersequenz, die Folgendes umfasst:
- Speichern eines Datenelements in einem primären Speicherraum, der verwendet wird, um im Wesentlichen dauerhaft den gesamten Datensatz des Speichersystems (100) zu speichern; wobei der primäre Speicherraum mit einer ersten Anordnung von VS-Vorrichtungen assoziiert ist und im Wesentlichen unmittelbar oder gleichzeitig die Wiederherstellung ermöglichende Daten speichert, die dem Datenelement im temporären Sicherheits-Speicherraum des Speichersystems (100) entsprechen, und mit einer zweiten Anordnung von VS-Vorrichtungen assoziiert ist, und
- Bestätigen der Schreibanfrage im Wesentlichen unmittelbar nach der Vervollständigung der Speicherung im primären Speicherraum und im temporären Sicherheits-Speicherraum;
Bereitstellen von Notstrom durch eine oder durch mehrere ununterbrochene Stromversorgungs (UPS)-Einheiten, um die Vervollständigung des Ausspeicherns von die Wiederherstellung ermöglichenden Daten für den gesamten Datensatz des Speichersystems für den Fall einer Stromunterbrechung zu ermöglichen; und
asynchron mit der vorläufigen redundanten Speichersequenz Ausspeichern der die Wiederherstellung ermöglichenden Daten an eine Anordnung von NVS-Vorrichtungen, die mit einem permanenten Sicherheits-Speicherraum des Speichersystems (100) assoziiert sind, wobei das Ausspeichern gemäß einem vorbestimmten permanenten Sicherheits-Verzögerungsgrundsatz durchgeführt wird, die einen gesteuerten Zeitrahmen festsetzt, um das Ausspeichern der die Wiederherstellung ermöglichenden Daten mit Bezug auf die entsprechende vorläufige redundante Speichersequenz zu verzögern;
wobei der Verzögerungsgrundsatz mit einer Fähigkeit der UPS-Einheiten assoziiert und derart konfiguriert ist, dass für den Fall einer Stromunterbrechung der Notstrom, der von den UPS-Einheiten zur Verfügung steht, ausreichend ist, um das Ausspeichern aller ausstehenden Schreibbefehle an den permanenten Sicherheits-Speicherraum zu ermöglichen und um die Speicherung von entsprechenden Sicherheitsdaten im permanenten Sicherheits-Speicherraum zu vervollständigen.

13. Verfahren nach Anspruch 12, weiter umfassend Freisetzen der temporären Speichermittel der Sicherheits-Speicherdaten, die verwendet wurden, um die die Wiederherstellung ermöglichenden Daten in Antwort auf ein Anzeige zu speichern, dass die die Wiederherstellung ermöglichenden Daten erfolgreich in den permanenten Sicherheits-Speicherraum ausgespeichert wurden.

14. Verfahren nach Anspruch 12, wobei der bevorzugte permanente Sicherheits-Verzögerungsgrundsatz in das Speichersystem (100) während eines normalen Betriebsmodus implementiert wird und das weiter das Schalten des Speichersystems (100) in einen Datenschutzmodus in Antwort auf eine Stromunterbrechung umfasst, und wobei, während des Datenschutzmodus unter Verwendung von Notstrom jedwede die Wiederherstellung ermöglichenden Daten ausgespeichert werden, die während des normalen Betriebsmodus noch nicht in den permanenten Speicherraum ausgespeichert wurden.

## Revendications

1. Système de stockage, comprenant :
un espace de stockage principal associé à une première pluralité de dispositifs de stockage volatil (« VS ») (10A - 10N), et utilisé en vue de stocker de manière sensiblement permanente la totalité de l'ensemble de données du système de stockage (100) ;
un espace de stockage de sauvegarde temporaire associé à une deuxième pluralité de dispositifs de stockage VS (11A - 11S) ;
un espace de stockage de sauvegarde permanent associé à une troisième pluralité de dispositifs de stockage non volatil (« NVS ») (30A - 30N) ;
un contrôleur de stockage (40) configuré de manière à fonctionner dans un mode normal au cours duquel le contrôleur est configuré de manière à amener ladite première pluralité de dispositifs de stockage VS (10A - 10N) à stocker de manière sensiblement permanente la totalité de l'ensemble de données du système de stockage (100) dans ledit espace de stockage principal, et destiné à mettre en oeuvre une séquence de stockage redondant provisoire, en réponse à une demande d'écriture connexe à un élément de données, consistant à :
- stocker l'élément de données au sein de l'espace de stockage principal, et sensiblement immédiatement, ou simultanément, stocker des données permettant une récupération correspondant à l'élément de données, au sein de l'espace de stockage de sauvegarde temporaire ; et
- accuser réception de la demande d'écriture sensiblement immédiatement après l'achèvement du stockage au sein de l'espace de stockage principal et au sein de l'espace de stockage de sauvegarde temporaire ;
et de manière asynchrone avec la séquence de stockage redondant provisoire, le contrôleur est apte à désactiver les données permettant une récupération sur l'espace de stockage de sauvegarde permanent selon une politique de report de sauvegarde permanente prédéfinie définissant une trame temporelle commandée destinée à reporter la désactivation des données permettant une récupération relativement à la séquence de stockage redondant provisoire respective ; et
une ou plusieurs unités de système d'alimentation sans coupure (UPS) configurées de manière à fournir une alimentation de secours en cas d'interruption d'alimentation, en vue de permettre l'achèvement de la désactivation de données permettant une récupération pour la totalité de l'ensemble de données du système de stockage (100) ;
dans lequel la politique de report est associée à une capacité des unités UPS et est configurée de sorte qu'en cas d'interruption d'alimentation, l'alimentation de secours disponible à partir des unités UPS est suffisante pour permettre la désactivation de la totalité des commandes d'écriture en attente sur l'espace de stockage de sauvegarde permanent, et pour achever le stockage des données de sauvegarde correspondantes au sein de l'espace de stockage de sauvegarde permanent.

2. Système selon la revendication 1, dans lequel le contrôleur répond à une indication selon laquelle les données permettant une récupération ont été correctement désactivées sur l'espace de stockage de sauvegarde permanent, en vue de libérer les ressources de stockage d'espace de stockage de sauvegarde temporaire qui ont été utilisées en vue de stocker les données correspondantes permettant une récupération.

3. Système selon la revendication 1, dans lequel la capacité de stockage de l'espace de stockage de sauvegarde temporaire est sensiblement inférieure à la capacité de stockage de l'espace de stockage principal, et la capacité de stockage de l'espace de stockage de sauvegarde permanent est sensiblement égale ou supérieure à la capacité de stockage de l'espace de stockage principal.

4. Système selon la revendication 1, dans lequel le contrôleur de stockage (40) est apte à fonctionner selon la politique de report de sauvegarde permanente prédéfinie, au cours d'un mode de fonctionnement normal, et dans lequel le contrôleur de stockage (40) répond à une interruption d'alimentation en vue de commuter sur un mode de protection de données au cours duquel le contrôleur est apte à désactiver, en utilisant l'alimentation de secours, des quelconques données permettant une récupération qui n'ont pas encore été désactivées sur l'espace de stockage de sauvegarde permanent au cours du mode de fonctionnement normal.

5. Système selon la revendication 4, dans lequel, au cours du fonctionnement normal du système de stockage (100), une partie relativement faible des données au sein de l'espace de stockage principal est protégée par des données au sein de l'espace de stockage de sauvegarde temporaire, et l'espace de stockage de sauvegarde permanent protège au moins les données restantes qui ne sont pas protégées par les données au sein de l'espace de stockage de sauvegarde temporaire.

6. Système selon la revendication 4, dans lequel, dès lors que l'alimentation appropriée reprend, le contrôleur de stockage (40) est apte à récupérer, à partir de l'espace de stockage permanent et dans l'espace de stockage principal, toutes les données qui ont été perdues par l'espace de stockage principal, avant de reprendre le service pour des demandes d'entrée/sortie, I/O, en provenance d'entités extérieures au système de stockage (100).

7. Système selon la revendication 1, dans lequel la taille de l'espace de stockage de sauvegarde temporaire est telle que l'alimentation de secours disponible est suffisante en vue de permettre la désactivation de la totalité des données permettant une récupération au sein de l'espace de stockage de sauvegarde temporaire, et d'achever le stockage des données de sauvegarde respectives au sein de l'espace de stockage de sauvegarde permanent.

8. Système selon la revendication 7, dans lequel la politique de report est associée à la taille de l'espace de stockage de sauvegarde temporaire, et est configurée de sorte que la désactivation de données permettant une récupération sur l'espace de stockage de sauvegarde permanent est promue lorsque la disponibilité des ressources de stockage au sein de l'espace de stockage de sauvegarde temporaire passe sous un niveau prédéfini.

9. Système selon la revendication 1, dans lequel la politique de report est configurée de sorte que la priorité est donnée à des désactivations de multiples données permettant une récupération, qui forment ensemble un bloc de données permettant une récupération qui correspond à des emplacements de stockage physique séquentiels au sein de l'espace de stockage de sauvegarde permanent, relativement à d'autres désactivations en attente.

10. Système selon la revendication 1, dans lequel la politique de report est associée à des services ou des processus qui sont en concurrence pour des ressources communes de système de stockage avec le processus de désactivation, et la politique de report est configurée de manière à mettre en oeuvre un schéma d'optimisation destiné à optimiser l'affectation de ressources du système au processus de désactivation et aux services ou processus qui sont en concurrence pour des ressources communes de système de stockage avec le processus de désactivation.

11. Système selon la revendication 10, dans lequel le schéma d'optimisation est associé à l'une quelconque ou à plusieurs des caractéristiques ci-après : des performances en cours, antérieures, projetées, ou envisagées du système ou de l'un quelconque de ses composants, une capacité en cours, antérieure, projetée, ou envisagée du système ou de l'un quelconque de ses composants, une priorité en cours, antérieure, projetée, ou envisagée d'un processus ou de services en cours ou en instance d'exécution dans le système, et une redondance en cours, antérieure, projetée, ou envisagée du système ou de l'un quelconque de ses composants.

12. Procédé de gestion d'un système de stockage, consistant à :
recevoir une demande d'écriture d'un élément de données dans le système de stockage (100) ;
en réponse à la demande d'écriture, mettre en oeuvre une séquence de stockage redondant provisoire consistant à :
- stocker un élément de données dans un espace de stockage principal qui est utilisé en vue de stocker de manière sensiblement permanente la totalité de l'ensemble de données du système de stockage (100), où l'espace de stockage principal est associé à un premier réseau de dispositifs de stockage VS, et sensiblement immédiatement, ou simultanément, stocker des données permettant une récupération correspondant à l'élément de données au sein d'un espace de stockage de sauvegarde temporaire du système de stockage (100), et à un second réseau de dispositifs de stockage VS ; et
- accuser réception de la demande d'écriture sensiblement immédiatement après l'achèvement du stockage au sein de l'espace de stockage principal et au sein de l'espace de stockage de sauvegarde temporaire ;
fournir une alimentation de secours, par le biais d'une ou plusieurs unités de système d'alimentation sans coupure (UPS), en vue de permettre l'achèvement de la désactivation de données permettant une récupération pour la totalité de l'ensemble de données du système de stockage, en cas d'interruption d'alimentation ; et
de manière asynchrone avec la séquence de stockage redondant provisoire, désactiver les données permettant une récupération sur un réseau de dispositifs de stockage NVS associés à un espace de stockage de sauvegarde permanent du système de stockage (100), dans lequel ladite désactivation est mise en oeuvre selon une politique de report de sauvegarde permanente prédéfinie définissant une trame temporelle commandée destinée à reporter la désactivation des données permettant une récupération relativement à la séquence de stockage redondant provisoire respective ;
dans lequel la politique de report est associée à une capacité des unités UPS et est configurée de sorte qu'en cas d'interruption d'alimentation, l'alimentation de secours disponible à partir des unités UPS est suffisante pour permettre la désactivation de la totalité des commandes d'écriture en attente sur l'espace de stockage de sauvegarde permanent, et pour achever le stockage des données de sauvegarde correspondantes au sein de l'espace de stockage de sauvegarde permanent.

13. Procédé selon la revendication 12, consistant en outre à libérer les ressources de stockage d'espace de stockage de sauvegarde temporaire qui ont été utilisées en vue de stocker les données permettant une récupération, en réponse à une indication selon laquelle les données permettant une récupération ont été correctement désactivées sur l'espace de stockage de sauvegarde permanent.

14. Procédé selon la revendication 12, dans lequel la politique de report de sauvegarde permanente prédéfinie est mise en oeuvre dans le système de stockage (100) au cours d'un mode de fonctionnement normal, et consistant en outre à commuter le système de stockage (100) sur un mode de protection de données en réponse à une interruption d'alimentation, et à, au cours du mode de protection de données, désactiver, en utilisant l'alimentation de secours, des quelconques données permettant une récupération qui n'ont pas encore été désactivées sur l'espace de stockage de sauvegarde permanent au cours du mode de fonctionnement normal.
